# EUROPEAN PATENT APPLICATION

(11) **EP 4 529 289 A1**
(43) Date of publication of application: **26.03.2025**
(21) Application number: 23845193.4
(22) Date of filing: 28.06.2023
(51) Int. Cl.: H04W 52/02

(54) **DISCONTINUOUS RECEPTION METHOD, AND APPARATUS**

(30) Priority: 27.07.2022 CN 202210895407
(71) Applicant: Huawei Technologies Co., Ltd., Shenzhen, Guangdong 518129 (CN)
(72) Inventor: CAO, Youlong, Shenzhen, Guangdong 518129 (CN); QIN, Yi, Shenzhen, Guangdong 518129 (CN); XUE, Yifan, Shenzhen, Guangdong 518129 (CN); CHEN, Erkai, Shenzhen, Guangdong 518129 (CN); XU, Rui, Shenzhen, Guangdong 518129 (CN)
(74) Representative: Goddar, Heinz J.
(86) International application number: PCT/CN2023/103418
(87) International publication number: WO 2024/021980

(57) **Abstract**

Embodiments of this application provide a discontinuous reception method and an apparatus. When at least the following conditions are satisfied: a DRX on duration timer started in a current DRX cycle duration does not expire, and a DRX-inactivity timer started in the current DRX cycle duration expires, the DRX on duration timer started in the current DRX cycle duration is stopped, so that unnecessary PDCCH monitoring can be reduced, power consumption of a terminal can be reduced, and a battery life of the terminal can be prolonged.

## Description

### CROSS-REFERENCE TO RELATED APPLICATIONS

This application claims priority to Chinese Patent Application No. 202210895407.X, filed with the China National Intellectual Property Administration on July 27, 2022 and entitled "DISCONTINUOUS RECEPTION METHOD AND APPARATUS", which is incorporated herein by reference in its entirety.

### TECHNICAL FIELD

This application relates to the field of communication technologies, and in particular, to a discontinuous reception method and an apparatus.

### BACKGROUND

In a wireless communication network, an extended reality (extended reality, XR) technology has advantages such as multiple perspectives and strong interactivity, can provide brand-new visual experience for a user, and has great application value and commercial potential. XR includes technologies such as virtual reality (virtual reality, VR), augmented reality (augmented reality, AR), and mix reality (mix reality, MR), and can be widely applied to many fields such as entertainment, gaming, medical care, advertising, industry, online education, and engineering.

For XR service data, jitter (jitter) occurs at an arrival moment of a data frame, that is, the arrival moment of the data frame may be earlier or later than an ideal arrival moment. Consequently, a terminal needs to monitor, in a longer time range, data that may arrive, leading to increasing power consumption of the terminal.

### SUMMARY

According to a first aspect, an embodiment of this application provides a discontinuous reception (discontinuous reception, DRX) method. The method may be performed by a terminal, or may be performed by a component (for example, a processor, a chip, or a chip system) of the terminal, or may be implemented by a logical module or software that can implement all or some functions of the terminal. The method includes: starting a DRX on duration timer and monitoring a physical downlink control channel (physical downlink control channel, PDCCH) in a DRX cycle duration; when the PDCCH indicating new data transmission is detected in the DRX cycle duration, starting a DRX-inactivity timer and continuing to monitor the PDCCH; and stopping the DRX on duration timer when at least the following conditions are satisfied: The DRX on duration timer does not expire, and the DRX-inactivity timer expires.

According to the foregoing method, after the terminal completes receiving or sending, in the DRX cycle duration, a data frame having jitter, a redundant part in an on duration is allowed to be stopped, and this may be considered as that the terminal enters a sleep state in advance, thereby reducing unnecessary PDCCH monitoring, reducing power consumption of the terminal, and prolonging a battery life of the terminal.

With reference to the first aspect, in some implementations of the first aspect, the method further includes: receiving DRX configuration information from a radio access network device. The stopping the DRX on duration timer when at least the foregoing conditions are satisfied includes: determining, based on the DRX configuration information, to stop the DRX on duration timer when at least the foregoing conditions are satisfied. In this implementation, the configuration information having an enabling/disabling function is introduced to enable a function of stopping the DRX on duration timer, so that a service transmission requirement can be more flexibly adapted.

With reference to the first aspect, in some implementations of the first aspect, after the starting a DRX-inactivity timer, the method further includes: when the PDCCH indicating new data transmission is detected, restarting the DRX-inactivity timer, and continuing to monitor the PDCCH. After the terminal is scheduled to receive or send data, the DRX-inactivity timer is restarted, so that the terminal may continue to be scheduled in a next period of time. Therefore, in this implementation, data scheduling of the terminal in a period of time can be completed in a more timely manner, a data transmission delay is reduced, and experience of a terminal user is improved.

With reference to the first aspect, in some implementations of the first aspect, after the stopping the DRX on duration timer, the method further includes: monitoring the PDCCH when one or both of the following timers are running and do not expire: a DRX downlink retransmission timer and a DRX uplink retransmission timer. Optionally, a time length of the DRX downlink retransmission timer and/or a time length of the DRX uplink retransmission timer are/is configured by a radio access network device. For example, the time length of the DRX downlink retransmission timer and/or the time length of the DRX uplink retransmission timer may be configured based on the foregoing DRX configuration information. In this implementation, retransmission of data that is incorrectly transmitted can be completed as soon as possible, to reduce a data transmission delay and improve experience of a terminal user.

With reference to the first aspect, in some implementations of the first aspect, a time length of the DRX on duration timer and a time length of the DRX-inactivity timer are configured by the radio access network device. For example, the time length of the DRX on duration timer and the time length of the DRX-inactivity timer may be configured based on the DRX configuration information. In this implementation, a time length of a timer can match a feature of service data as much as possible, so that data is received or sent as completely and in a timely manner as possible while power consumption of the terminal is reduced, thereby improving experience of a terminal user.

According to a second aspect, an embodiment of this application provides a DRX method. The method may be performed by a radio access network device, may be performed by a component (for example, a processor, a chip, or a chip system) of the radio access network device, or may be implemented by a logical module or software that can implement all or some functions of the radio access network device. The method includes: sending DRX configuration information to a terminal, where a DRX on duration timer started in a DRX cycle duration is configured, based on the DRX configuration information, to stop when at least the following conditions are satisfied: The DRX on duration timer does not expire, and a DRX-inactivity timer started in the DRX cycle duration expires.

According to the foregoing method, while a service transmission requirement is flexibly adapted, after the terminal is enabled to complete receiving or sending, in the DRX cycle duration, a data frame having jitter, a redundant part in an on duration can be stopped, and this may be considered as that the terminal enters a sleep state in advance, thereby reducing unnecessary PDCCH monitoring, reducing power consumption of the terminal, and prolonging a battery life of the terminal.

With reference to the second aspect, in some implementations of the second aspect, a time length of the DRX on duration timer and a time length of the DRX-inactivity timer are further configured based on the DRX configuration information. In this implementation, a time length of a timer can match a feature of service data as much as possible, so that data is received or sent as completely and in a timely manner as possible while power consumption of the terminal is reduced, thereby improving experience of a terminal user.

According to a third aspect, an embodiment of this application provides a DRX method. The method may be performed by a terminal, or may be performed by a component (for example, a processor, a chip, or a chip system) of the terminal, or may be implemented by a logical module or software that can implement all or some functions of the terminal. The method includes: starting a DRX on duration timer and monitoring a PDCCH in a DRX cycle duration; when the PDCCH indicating new data transmission is detected in the DRX cycle duration, restarting a DRX-inactivity timer started before the DRX cycle duration, and continuing to monitor the PDCCH; and continuing to run the DRX on duration timer when at least the following conditions are satisfied: The DRX on duration timer does not expire, and the DRX-inactivity timer expires.

It may be understood that the foregoing method may alternatively not include the step of "when the PDCCH indicating new data transmission is detected in the DRX cycle duration, restarting a DRX-inactivity timer started before the DRX cycle duration, and continuing to monitor the PDCCH". In this case, the foregoing conditions "the DRX on duration timer does not expire, and the DRX-inactivity timer expires" are replaced with "the DRX on duration timer does not expire, and a DRX-inactivity timer started before the DRX cycle duration expires".

According to the foregoing method, the terminal may continue to monitor the PDCCH in a current DRX cycle duration without being affected by a DRX-inactivity timer started in a previous DRX cycle duration, so that data transmission in the current DRX cycle duration is not affected by the DRX-inactivity timer started in the previous DRX cycle duration, thereby improving overall data transmission efficiency.

With reference to the third aspect, in some implementations of the third aspect, the method further includes: receiving DRX configuration information from a radio access network device. The continuing to run the DRX on duration timer when at least the foregoing conditions are satisfied includes: determining, based on the DRX configuration information, to continue to run the DRX on duration timer when at least the foregoing conditions are satisfied. In this implementation, the configuration information having an enabling/disabling function is introduced to enable a function of continuing to run the DRX on duration timer, so that a service transmission requirement can be more flexibly adapted.

With reference to the third aspect, in some implementations of the third aspect, the method further includes: when the PDCCH indicating new data transmission is detected, restarting the DRX-inactivity timer, and continuing to monitor the PDCCH. After the terminal is scheduled to receive or send data, the DRX-inactivity timer is restarted, so that the terminal may continue to be scheduled in a next period of time. Therefore, in this implementation, data scheduling of the terminal in a period of time can be completed in a more timely manner, a data transmission delay is reduced, and experience of a terminal user is improved.

With reference to the third aspect, in some implementations of the third aspect, the method further includes: monitoring the PDCCH when one or both of the following timers are running and do not expire: a DRX downlink retransmission timer and a DRX uplink retransmission timer. Optionally, a time length of the DRX downlink retransmission timer and/or a time length of the DRX uplink retransmission timer are/is configured by a radio access network device. For example, the time length of the DRX downlink retransmission timer and/or the time length of the DRX uplink retransmission timer may be configured based on the foregoing DRX configuration information. In this implementation, retransmission of data that is incorrectly transmitted can be completed as soon as possible, to reduce a data transmission delay and improve experience of a terminal user.

With reference to the third aspect, in some implementations of the third aspect, a time length of the DRX on duration timer and a time length of the DRX-inactivity timer are configured by the radio access network device. For example, the time length of the DRX on duration timer and the time length of the DRX-inactivity timer may be configured based on the DRX configuration information. In this implementation, a time length of a timer can match a feature of service data as much as possible, so that data is received or sent as completely and in a timely manner as possible while power consumption of the terminal is reduced, thereby improving experience of a terminal user.

According to a fourth aspect, an embodiment of this application provides a DRX method. The method may be performed by a radio access network device, may be performed by a component (for example, a processor, a chip, or a chip system) of the radio access network device, or may be implemented by a logical module or software that can implement all or some functions of the radio access network device. The method includes: sending DRX configuration information to a terminal, where a DRX on duration timer started in a DRX cycle duration is configured, based on the DRX configuration information, to continue to run when at least the following conditions are satisfied: The DRX on duration timer does not expire, and a DRX-inactivity timer started before the DRX cycle duration expires.

According to the foregoing method, while a service transmission requirement is flexibly adapted, the PDCCH can continue to be monitored in a current DRX cycle duration without being affected by a DRX-inactivity timer started in a previous DRX cycle duration, so that data transmission in the current DRX cycle duration is not affected by the DRX-inactivity timer started in the previous DRX cycle duration, thereby improving overall data transmission efficiency.

With reference to the fourth aspect, in some implementations of the fourth aspect, a time length of the DRX on duration timer and a time length of the DRX-inactivity timer are further configured based on the DRX configuration information. In this implementation, a time length of a timer can match a feature of service data as much as possible, so that data is received or sent as completely and in a timely manner as possible while power consumption of the terminal is reduced, thereby improving experience of a terminal user.

According to a fifth aspect, an embodiment of this application provides a DRX method. The method may be performed by a terminal, or may be performed by a component (for example, a processor, a chip, or a chip system) of the terminal, or may be implemented by a logical module or software that can implement all or some functions of the terminal. The method includes: receiving DRX configuration information from a radio access network device, where PDCCH monitoring rasters are configured based on the DRX configuration information, and the PDCCH monitoring rasters are for monitoring a PDCCH; monitoring the PDCCH on the PDCCH monitoring rasters in a DRX cycle duration; when the PDCCH indicating new data transmission is detected in the DRX cycle duration, starting a DRX-inactivity timer, and continuing to monitor the PDCCH on the PDCCH monitoring rasters in the DRX cycle duration; and stopping monitoring the PDCCH on the PDCCH monitoring rasters in the DRX cycle duration when at least the following condition is satisfied: The DRX-inactivity timer expires.

According to the foregoing method, after the terminal completes receiving or sending, in the DRX cycle duration, a data frame having jitter, PDCCH monitoring on a remaining PDCCH monitoring raster in an on duration is allowed to be stopped, and this may be considered as that the terminal enters a sleep state in advance, thereby reducing unnecessary PDCCH monitoring, reducing power consumption of the terminal, and prolonging a battery life of the terminal.

With reference to the fifth aspect, in some implementations of the fifth aspect, after the starting a DRX-inactivity timer, the method further includes: when the PDCCH indicating new data transmission is detected, restarting the DRX-inactivity timer, and continuing to monitor the PDCCH on the PDCCH monitoring rasters. After the terminal is scheduled to receive or send data, the DRX-inactivity timer is restarted, so that the terminal may continue to be scheduled in a next period of time. Therefore, according to the method, data scheduling of the terminal in a period of time can be completed in a more timely manner, a data transmission delay is reduced, and experience of a terminal user is improved.

With reference to the fifth aspect, in some implementations of the fifth aspect, after the stopping monitoring the PDCCH on the PDCCH monitoring rasters in the DRX cycle duration, the method further includes: monitoring the PDCCH in the DRX cycle duration when one or both of the following timers are running and do not expire: a DRX downlink retransmission timer and a DRX uplink retransmission timer. Optionally, a time length of the DRX downlink retransmission timer and/or a time length of the DRX uplink retransmission timer are/is further configured based on the DRX configuration information. According to the method, retransmission of data that is incorrectly transmitted can be completed as soon as possible, to reduce a data transmission delay and improve experience of a terminal user.

With reference to the fifth aspect, in some implementations of the fifth aspect, a time length of the DRX-inactivity timer is further configured based on the DRX configuration information. In this implementation, a time length of a timer can match a feature of service data as much as possible, so that data is received or sent as completely and in a timely manner as possible while power consumption of the terminal is reduced, thereby improving experience of a terminal user.

With reference to the fifth aspect, in some implementations of the fifth aspect, the stopping monitoring the PDCCH on the PDCCH monitoring rasters in the DRX cycle duration when at least the foregoing condition is satisfied includes: determining, based on the DRX configuration information, to stop monitoring the PDCCH on the PDCCH monitoring rasters in the DRX cycle duration when at least the foregoing condition is satisfied. In this implementation, a function of stopping monitoring the PDCCH on the PDCCH monitoring rasters is enabled based on the configuration information having an enabling/disabling function, so that a service transmission requirement can be more flexibly adapted.

According to a sixth aspect, an embodiment of this application provides a DRX method. The method may be performed by a radio access network device, may be performed by a component (for example, a processor, a chip, or a chip system) of the radio access network device, or may be implemented by a logical module or software that can implement all or some functions of the radio access network device. The method includes: sending DRX configuration information to a terminal, where PDCCH monitoring rasters are configured based on the DRX configuration information, the PDCCH monitoring rasters are for monitoring a PDCCH, and PDCCH monitoring on the PDCCH monitoring rasters in a DRX cycle duration is further configured, based on the DRX configuration information, to stop when at least the following condition is satisfied: A DRX-inactivity timer started in the DRX cycle duration expires.

According to the foregoing method, while a service transmission requirement is flexibly adapted, after the terminal is enabled to complete receiving or sending, in the DRX cycle duration, a data frame having jitter, PDCCH monitoring can be stopped in a remaining PDCCH monitoring raster in an on duration, and this may be considered as that the terminal enters a sleep state in advance, thereby reducing unnecessary PDCCH monitoring, reducing power consumption of the terminal, and prolonging a battery life of the terminal.

With reference to the sixth aspect, in some implementations of the sixth aspect, a time length of the DRX-inactivity timer is further configured based on the DRX configuration information. In this implementation, a time length of a timer can match a feature of service data as much as possible, so that data is received or sent as completely and in a timely manner as possible while power consumption of the terminal is reduced, thereby improving experience of a terminal user.

According to a seventh aspect, an embodiment of this application provides a DRX method. The method may be performed by a terminal, or may be performed by a component (for example, a processor, a chip, or a chip system) of the terminal, or may be implemented by a logical module or software that can implement all or some functions of the terminal. The method includes: receiving DRX configuration information from a radio access network device, where PDCCH monitoring rasters for monitoring a PDCCH are configured based on the DRX configuration information; monitoring the PDCCH on PDCCH monitoring rasters in a DRX cycle duration; when the PDCCH indicating new data transmission is detected in the DRX cycle duration, restarting a DRX-inactivity timer started before the DRX cycle duration, and continuing to monitor the PDCCH on the PDCCH monitoring rasters in the DRX cycle duration; and continuing to monitor the PDCCH on the PDCCH monitoring rasters in the DRX cycle duration when at least the following condition is satisfied: The DRX-inactivity timer expires.

It may be understood that the foregoing method may alternatively not include the step of "when the PDCCH indicating new data transmission is detected in the DRX cycle duration, restarting a DRX-inactivity timer started before the DRX cycle **duration,** and continuing to monitor the PDCCH on the PDCCH monitoring rasters in the DRX cycle duration". In this case, the foregoing condition "the DRX-inactivity timer expires" is replaced with "a DRX-inactivity timer started before the DRX cycle duration expires".

According to the foregoing method, the terminal may continue to monitor the PDCCH on the PDCCH monitoring rasters in a current DRX cycle duration without being affected by a DRX-inactivity timer started in a previous DRX cycle duration, so that data transmission in the current DRX cycle duration is not affected by the DRX-inactivity timer started in the previous DRX cycle duration, thereby improving overall data transmission efficiency.

With reference to the seventh aspect, in some implementations of the seventh aspect, the method further includes: when the PDCCH indicating new data transmission is detected, restarting the DRX-inactivity timer, and continuing to monitor the PDCCH on the PDCCH monitoring rasters. After the terminal is scheduled to receive or send data, the DRX-inactivity timer is restarted, so that the terminal may continue to be scheduled in a next period of time. Therefore, according to the method, data scheduling of the terminal in a period of time can be completed in a more timely manner, a data transmission delay is reduced, and experience of a terminal user is improved.

With reference to the seventh aspect, in some implementations of the seventh aspect, the method further includes: monitoring the PDCCH in the DRX cycle duration when one or both of the following timers are running and do not expire: a DRX downlink retransmission timer and a DRX uplink retransmission timer. Optionally, a time length of a DRX downlink retransmission timer and/or a time length of a DRX uplink retransmission timer are/is further configured based on the DRX configuration information. According to the method, retransmission of data that is incorrectly transmitted can be completed as soon as possible, to reduce a data transmission delay and improve experience of a terminal user.

With reference to the seventh aspect, in some implementations of the seventh aspect, a time length of the DRX-inactivity timer is further configured based on the DRX configuration information. In this implementation, a time length of a timer can match a feature of service data as much as possible, so that data is received or sent as completely and in a timely manner as possible while power consumption of the terminal is reduced, thereby improving experience of a terminal user.

With reference to the seventh aspect, in some implementations of the seventh aspect, the continuing to monitor the PDCCH on the PDCCH monitoring rasters in the DRX cycle duration when at least the following condition is satisfied includes: determining, based on the DRX configuration information, to continue to monitor the PDCCH on the PDCCH monitoring rasters in the DRX cycle duration when at least the foregoing condition is satisfied. In this implementation, a function of continuing to monitor the PDCCH on the PDCCH monitoring rasters is enabled based on the configuration information having an enabling/disabling function, so that a service transmission requirement can be more flexibly adapted.

According to an eighth aspect, an embodiment of this application provides a DRX method. The method may be performed by a radio access network device, may be performed by a component (for example, a processor, a chip, or a chip system) of the radio access network device, or may be implemented by a logical module or software that can implement all or some functions of the radio access network device. The method includes: sending DRX configuration information to a terminal, where PDCCH monitoring rasters are configured based on the DRX configuration information, the PDCCH monitoring rasters are for monitoring a PDCCH, and PDCCH monitoring on the PDCCH monitoring rasters in a DRX cycle duration is further configured, based on the DRX configuration information, to continue to be performed when at least the following condition is satisfied: A DRX-inactivity timer started before the DRX cycle duration expires.

According to the foregoing method, while a service transmission requirement is flexibly adapted, the terminal can be enabled to continue to monitor the PDCCH on PDCCH monitoring rasters in a current DRX cycle duration without being affected by a DRX-inactivity timer started in a previous DRX cycle duration, so that data transmission in the current DRX cycle duration is not affected by the DRX-inactivity timer started in the previous DRX cycle duration, thereby improving overall data transmission efficiency.

With reference to the eighth aspect, in some implementations of the eighth aspect, a time length of the DRX-inactivity timer is further configured based on the DRX configuration information. In this implementation, a time length of a timer can match a feature of service data as much as possible, so that data is received or sent as completely and in a timely manner as possible while power consumption of the terminal is reduced, thereby improving experience of a terminal user.

According to a ninth aspect, an embodiment of this application provides an apparatus, to implement the method according to any one of the first aspect, the third aspect, the fifth aspect, the seventh aspect, the possible implementations of the first aspect, the possible implementations of the third aspect, the possible implementations of the fifth aspect, or the possible implementations of the seventh aspect. The apparatus includes a corresponding unit or module configured to perform the method. The unit or module included in the apparatus can be implemented by software and/or hardware. The apparatus may be, for example, a terminal, or may be a chip, a chip system, a processor, or the like that supports a terminal in implementing the method, or may be a logical module or software that can implement all or some functions of a terminal.

According to a tenth aspect, an embodiment of this application provides an apparatus, to implement the method according to any one of the second aspect, the fourth aspect, the sixth aspect, the eighth aspect, the possible implementations of the second aspect, the possible implementations of the fourth aspect, the possible implementations of the sixth aspect, or the possible implementations of the eighth aspect. The apparatus includes a corresponding unit or module configured to perform the method. The unit or module included in the apparatus can be implemented by software and/or hardware. The apparatus may be, for example, a radio access network device, or may be a chip, a chip system, a processor, or the like that supports the radio access network device in implementing the method, or may be a logical module or software that can implement all or some functions of the radio access network device.

According to an eleventh aspect, an embodiment of this application provides an apparatus, including a processor. The processor is coupled to a memory, and the memory is configured to store instructions. When the instructions are executed by the processor, the apparatus is caused to implement the method according to any one of the first aspect, the third aspect, the fifth aspect, the seventh aspect, the possible implementations of the first aspect, the possible implementations of the third aspect, the possible implementations of the fifth aspect, or the possible implementations of the seventh aspect.

According to a twelfth aspect, an embodiment of this application provides an apparatus, including a processor. The processor is coupled to a memory, and the memory is configured to store instructions. When the instructions are executed by the processor, the apparatus is caused to implement the method according to any one of the second aspect, the fourth aspect, the sixth aspect, the eighth aspect, the possible implementations of the second aspect, the possible implementations of the fourth aspect, the possible implementations of the sixth aspect, or the possible implementations of the eighth aspect.

According to a thirteenth aspect, an embodiment of this application provides a computer-readable storage medium. The computer-readable storage medium stores instructions. When the instructions are executed, a computer is caused to perform the method according to any one of the first aspect, the third aspect, the fifth aspect, the seventh aspect, the possible implementations of the first aspect, the possible implementations of the third aspect, the possible implementations of the fifth aspect, or the possible implementations of the seventh aspect.

According to a fourteenth aspect, an embodiment of this application provides a computer-readable storage medium. The computer-readable storage medium stores instructions. When the instructions are executed, a computer is caused to perform the method according to any one of the second aspect, the fourth aspect, the sixth aspect, the eighth aspect, the possible implementations of the second aspect, the possible implementations of the fourth aspect, the possible implementations of the sixth aspect, or the possible implementations of the eighth aspect.

According to a fifteenth aspect, an embodiment of this application provides a computer program product. The computer program product includes computer program code. When the computer program code is run on a computer, the computer is caused to perform the method according to any one of the first aspect, the third aspect, the fifth aspect, the seventh aspect, the possible implementations of the first aspect, the possible implementations of the third aspect, the possible implementations of the fifth aspect, or the possible implementations of the seventh aspect.

According to a sixteenth aspect, an embodiment of this application provides a computer program product. The computer program product includes computer program code. When the computer program code is run on a computer, the computer is caused to perform the method according to any one of the second aspect, the fourth aspect, the sixth aspect, the eighth aspect, the possible implementations of the second aspect, the possible implementations of the fourth aspect, the possible implementations of the sixth aspect, or the possible implementations of the eighth aspect.

According to a seventeenth aspect, an embodiment of this application provides a chip, including: a processor. The processor is coupled to a memory, and the memory is configured to store instructions. When the instructions are executed by the processor, the chip is caused to implement the method according to any one of the first aspect, the second aspect, the third aspect, the fourth aspect, the fifth aspect, the sixth aspect, the seventh aspect, the eighth aspect, the possible implementations of the first aspect, the possible implementations of the second aspect, the possible implementations of the third aspect, the possible implementations of the fourth aspect, the possible implementations of the fifth aspect, the possible implementations of the sixth aspect, the possible implementations of the seventh aspect, or the possible implementations of the eighth aspect.

According to an eighteenth aspect, an embodiment of this application provides a communication system, including the apparatus according to the ninth aspect and the apparatus according to the tenth aspect.

According to a nineteenth aspect, an embodiment of this application provides a communication system, including the apparatus according to the eleventh aspect and the apparatus according to the twelfth aspect.

It may be understood that, for beneficial effects of features, corresponding to the first aspect, the second aspect, the third aspect, the fourth aspect, the fifth aspect, the sixth aspect, the seventh aspect, and the eighth aspect, in the ninth aspect to the nineteenth aspect, refer to related descriptions in the first aspect, the second aspect, the third aspect, the fourth aspect, the fifth aspect, the sixth aspect, the seventh aspect, and the eighth aspect. Details are not described again.

### BRIEF DESCRIPTION OF DRAWINGS

FIG. 1 is a diagram of a communication system to which an embodiment of this application is applied;
FIG. 2 to FIG. 5 are diagrams of several system frameworks to which embodiments of this application are applicable;
FIG. 6 is a diagram of data frame arrival according to an embodiment of this application;
FIG. 7 and FIG. 8 are diagrams of discontinuous reception (discontinuous reception, DRX) according to an embodiment of this application;
FIG. 9 is a diagram of a DRX method according to an embodiment of this application;
FIG. 10 is a diagram of another DRX according to an embodiment of this application;
FIG. 11 is a diagram of another DRX method according to an embodiment of this application;
FIG. 12 is a diagram of another DRX according to an embodiment of this application;
FIG. 13 is a diagram of another DRX method according to an embodiment of this application;
FIG. 14 is a diagram of monitoring rasters according to an embodiment of this application;
FIG. 15 is a diagram of another DRX according to an embodiment of this application;
FIG. 16 is a diagram of another DRX method according to an embodiment of this application;
FIG. 17 is a diagram of another DRX according to an embodiment of this application;
FIG. 18 is a diagram of a structure of a terminal according to an embodiment of this application;
FIG. 19 is a diagram of a structure of an apparatus according to an embodiment of this application; and
FIG. 20 is a diagram of another apparatus according to an embodiment of this application.

### DESCRIPTION OF EMBODIMENTS

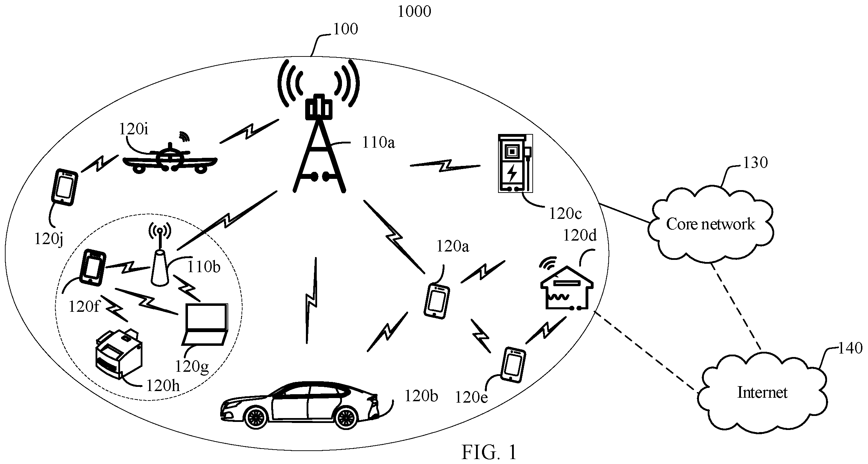

FIG. 1 is a diagram of an architecture of a communication system to which an embodiment of this application is applied. As shown in FIG. 1, the communication system includes a radio access network 100 and a core network 130. Optionally, the communication system 1000 may further include an internet 140. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different devices, functions of a core network device and logical functions of the radio access network device are integrated into a same device, or some functions of a core network device and some functions of the radio access network device are integrated into one device. Terminals may be connected to each other in a wired or wireless manner, and radio access network devices may be connected to each other in a wired or wireless manner. FIG. 1 is merely a diagram. The communication system may further include another network device, for example, may further include a relay device and a backhaul device, which are not shown in FIG. 1.

A method and an apparatus that are provided in embodiments of this application may be used in various communication systems, for example, a 4th generation (4th generation, 4G) communication system, a 4.5G communication system, a 5G communication system, a 5.5G communication system, a 6G communication system, a system integrating a plurality of communication systems, or a future evolved communication system, for example, a long term evolution (long term evolution, LTE) system, a new radio (new radio, NR) system, a wireless fidelity (wireless fidelity, Wi-Fi) system, a 3rd generation partnership project (3rd generation partnership project, 3GPP)-related communication system, and another communication system of this type.

The radio access network device (which is also referred to as a network device sometimes in this application) may be a base station (base station), an evolved NodeB (evolved NodeB, eNodeB), a transmission reception point (transmission reception point, TRP), a next generation NodeB (next generation NodeB, gNB) in a 5G mobile communication system, a next generation base station in a 6G mobile communication system, a base station in a future mobile communication system, an access node in the Wi-Fi system, or the like, or may be a module or a unit that completes some functions of a base station, for example, may be a central unit (central unit, CU) or a distributed unit (distributed unit, DU). The radio access network device may be a macro base station (for example, 110a in FIG. 1), or may be a micro base station or an indoor base station (for example, 110b in FIG. 1), or may be a relay node, a donor node, or the like. It may be understood that all or some functions of the radio access network device in this application may also be implemented by a software function running on hardware, or may be implemented by using an instantiated virtualization function on a platform (for example, a cloud platform). A specific technology and a specific device form that are used by the radio access network device are not limited in embodiments of this application. For ease of description, the following provides descriptions by using an example in which the base station is used as the radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine type communication (machine type communication, MTC), internet of things (internet of things, IoT), virtual reality, augmented reality, industrial control, self-driving, telemedicine, a smart grid, smart furniture, a smart office, a smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

Alternatively, the terminal in this application may be a VR terminal, an AR terminal, or an MR terminal. The VR terminal, the AR terminal, and the MR terminal each may be referred to as an XR terminal. The XR terminal may be, for example, a head mounted device (for example, a helmet or glasses), may be an all-in-one machine, or may be a television, a display, a car, a vehicle-mounted device, a tablet, or a smart screen. The XR terminal can present XR data to a user, and the user can experience diversified XR services by wearing or using the XR terminal. The XR terminal may access a network in a wireless or wired manner, for example, access the network via the Wi-Fi system, the 5G system, or another system.

The base station and the terminal may at a fixed location or may be movable. The base station and the terminal may be deployed on the land, including an indoor device or an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Roles of the base station and the terminal may be relative. For example, the airplane or uncrewed aerial vehicle 120i in FIG. 1 may be configured as a mobile base station. For the terminal 120j that accesses the radio access network 100 through 120i, the terminal 120i is a base station. However, for the base station 110a, 120i is a terminal, that is, 110a and 120i communicate with each other through a radio air interface protocol. Certainly, 110a and 120i may alternatively communicate with each other through an interface protocol between base stations. In this case, for 110a, 120i is also a base station. Therefore, the base station and the terminal may be collectively referred to as a communication apparatus, 110a and 110b in FIG. 1 each may be referred to as a communication apparatus having a base station function, and 120a to 120j in FIG. 1 each may be referred to as a communication apparatus having a terminal function.

Communication between the base station and the terminal, between the base stations, or between terminals may be performed through a licensed spectrum, may be performed through an unlicensed spectrum, or may be performed through both a licensed spectrum and an unlicensed spectrum. Communication may be performed through a spectrum below 6 gigahertz (gigahertz, GHz), may be performed through a spectrum above 6 GHz, or may be performed through both a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem that includes a base station function herein may be a control center in an application scenario of the foregoing terminal, such as the smart grid, the industrial control, the smart transportation, and the smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel. The terminal sends an uplink signal or uplink information to the base station, where the uplink information is carried on an uplink channel. The terminal sends a sidelink (sidelink) signal or sidelink information to the terminal, where the sidelink information is carried on a sidelink channel. The information may be control information, or may be data information.

An XR technology has advantages such as multiple perspectives and strong interactivity, can provide brand-new experience for a user, and has great application value and commercial potential. XR includes technologies such as VR, AR, and MR, and can be widely applied to many fields such as entertainment, gaming, medical care, advertising, industry, online education, and engineering. The VR technology is mainly to render visual and audio scenarios, to simulate sensory stimulation of vision and audio in a real world to a user as much as possible. The VR technology usually requires the user to wear the XR terminal (for example, the head mounted device) to simulate vision and/or hearing of the user. The VR technology may further perform action tracking on the user, to update simulated visual and/or auditory content in a timely manner. The AR technology is mainly to provide additional visual and/or auditory information or manually generated content in a real environment perceived by a user. The user may directly (where for example, sensing, processing, and rendering are not performed) or indirectly (where for example, transfer is performed through a sensor or the like) perceive the real environment, and enhancement processing may be further performed. The MR technology is to insert some virtual elements into a physical scenario, to provide immersive experience for a user by adding these elements as a part of a real scenario.

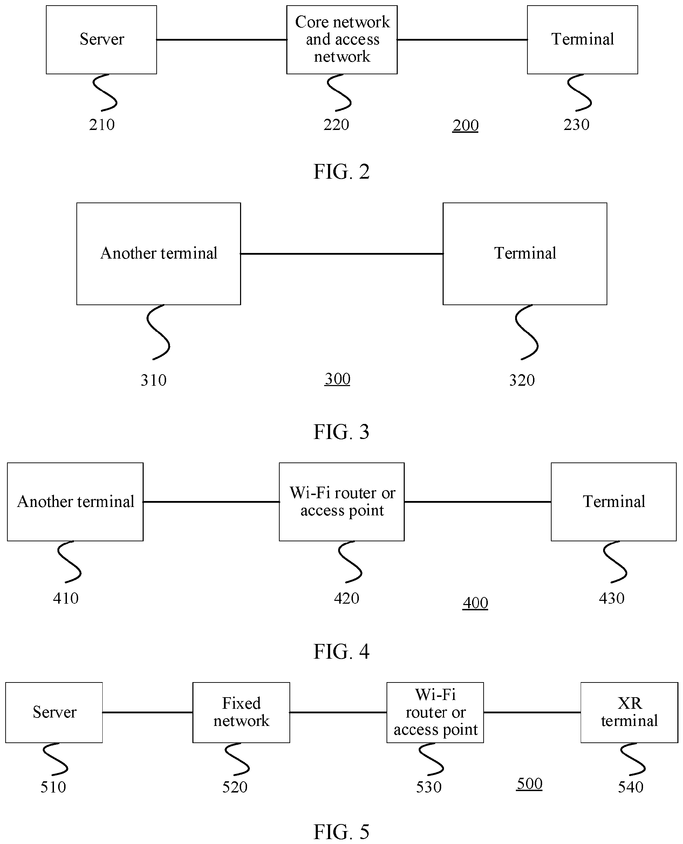

Embodiments provided in this application are applicable to a plurality of different scenarios. FIG. 2 to FIG. 5 are diagrams of several system frameworks to which embodiments of this application are applicable.

FIG. 2 is a diagram of a scenario to which an embodiment of this application is applicable. FIG. 2 shows a system 200, including a server 210, a core network and access network 220 (which may be briefly referred to as a transport network 220, for example, an LTE network, a 5G network, or a 6G network), and a terminal 230. The server 210 may be configured to: encode, decode, and render XR source data. The transport network 220 may be configured to transmit XR data. The terminal 230 provides diversified XR experience for a user by processing the XR data. It may be understood that another apparatus may be further included between the transport network 220 and the terminal 230. For example, another terminal (for example, a mobile phone, a notebook computer, or a vehicle-mounted terminal) and/or a network device (for example, a relay device, an integrated access backhaul (integrated access backhaul, IAB) device, a Wi-Fi router, or a Wi-Fi access point) may be further included. The terminal 230 obtains the XR data from the transport network 220 through the another terminal and/or the network device.

FIG. 3 is a diagram of another scenario to which an embodiment of this application is applicable. FIG. 3 shows a system 300, including a terminal 320 and another terminal 310. The another terminal 310 is a terminal other than the terminal 320. The another terminal 310 may transmit XR data to the terminal 320. For example, the another terminal 310 may project the XR data to the terminal 320. For another example, the another terminal 310 and the terminal 320 are vehicle-mounted terminals, and the XR data may be exchanged between vehicle-mounted terminals. It may be understood that the another terminal 310 may be further connected to a transport network (for example, an LTE network, a 5G network, or a 6G network), to obtain XR data from the transport network, or send data to the transport network.

FIG. 4 is a diagram of another scenario to which an embodiment of this application is applicable. FIG. 4 shows a system 400, including a terminal 430, a Wi-Fi router or Wi-Fi access point 420 (which may be briefly referred to as a Wi-Fi apparatus 420), and another terminal 410. The another terminal 410 is a terminal other than the terminal 430. The another terminal 410 may transmit XR data to the terminal 430 through the Wi-Fi apparatus 420. For example, the another terminal 410 is a mobile phone device, the Wi-Fi apparatus 420 is the Wi-Fi router, the Wi-Fi access point, or a set-top box, and the terminal 430 is a television device, a smart screen device, or an electronic tablet device. The mobile phone device may project the XR data to the television device, the smart screen device, or the electronic tablet device through the Wi-Fi router, the Wi-Fi access point, or the set-top box, and present the XR data to a user.

FIG. 5 is a diagram of another scenario to which an embodiment of this application is applicable. FIG. 5 shows a system 500, including a server 510, a fixed network 520, a Wi-Fi router or Wi-Fi access point 530 (which may be briefly referred to as a Wi-Fi apparatus 530), and a terminal 540. The server 510 may be configured to: encode, decode, and render XR source data, and transmit XR data to the terminal 540 through the fixed network 520 and the Wi-Fi apparatus 530. For example, the fixed network 520 is an operator network, the Wi-Fi apparatus 530 is the Wi-Fi router, the Wi-Fi access point, or a set-top box, and the server 510 transmits or projects the XR data to the terminal 540 through the operator network 520 and the Wi-Fi apparatus 530.

It may be understood that FIG. 2 to FIG. 5 are merely examples of several scenarios to which embodiments of this application are applicable, and do not limit a scenario to which embodiments of this application are applicable.

The following describes technical solutions of this application with reference to the accompanying drawings.

With the gradual penetration of some multimedia services with high real-time performance and a large data capacity into a communication system, and an increasingly lightweight design of a terminal, a battery life of the terminal becomes one of focuses of a user. For example, for an XR service, the user increasingly expects to improve experience by using a head mounted terminal like a head mounted display (head mounted display, HMD) or smart glasses (such as VR glasses and AR glasses). However, the head mounted terminal is limited by a size, has a low battery capacity, and is expected to be worn for a long time. Therefore, power consumption control of the head mounted terminal becomes an important part in a process of using the head mounted terminal. For another example, for long-time cloud gaming or video transmission, the user also expects that the terminal has a long battery life. Therefore, power consumption control of the terminal is also an important part in a process of using the terminal.

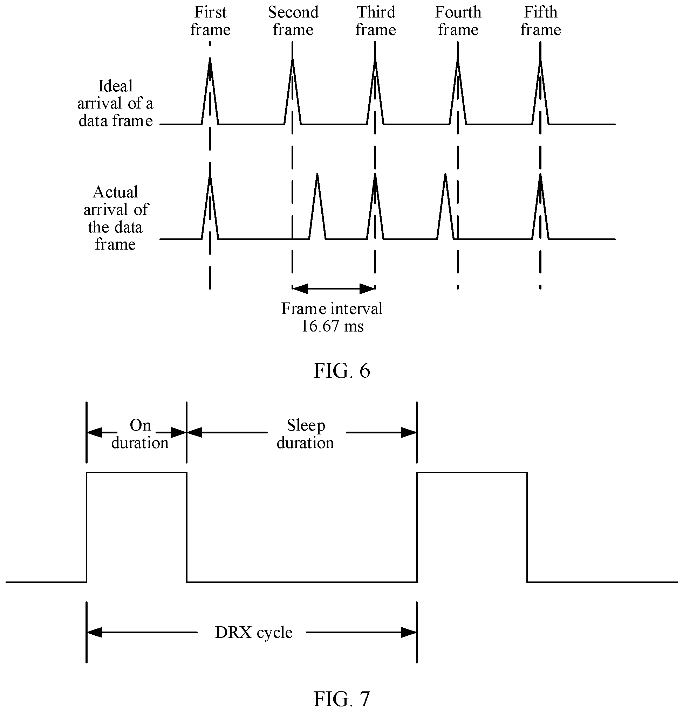

A data frame of an XR service usually arrives periodically based on a frame rate. However, due to factors such as coding processing of a server and transmission of a fixed network/core network, the data frame arrives at a network device not necessarily in a strictly periodic manner. As shown in FIG. 6, for a video with a frame rate of 60 frames per second (frame per second, FPS), in an ideal case, an interval between data frames is 1/60 seconds (s), that is, one data frame arrives at an interval of 16.67 milliseconds (ms). However, due to factors such as coding processing of a server and transmission of a fixed network/core network, a delay with which each data frame arrives at a network device is different, and intervals between data frames are no longer strictly 16.67 ms. That is, jitter exists at an arrival moment of the data frame. For example, in FIG. 6, arrival of a second frame is delayed by 5 ms. In other words, jitter = 5 ms, and arrival of a fourth frame is advanced by 3 ms. In other words, jitter = -3 ms.

A discontinuous reception (discontinuous reception, DRX) mechanism can reduce power consumption of a terminal. The DRX mechanism can be implemented by configuring an on duration of a DRX cycle (DRX cycle). The DRX cycle may also be referred to as a DRX cycle duration. A name of the DRX cycle is not limited in this application. FIG. 7 is used as an example, and the DRX cycle includes an on duration and a sleep duration. The on duration (on duration) may also be referred to as a wake-up duration, an activation duration, an activity duration, an on-duration, or the like. A name of the on duration is not limited in this application. The terminal may monitor a physical downlink control channel (physical downlink control channel, PDCCH) from a radio access network device in the on duration. The sleep duration may also be referred to as a dormancy duration, an inactivity duration, a non-inactivity duration, a closed-duration, or the like. A name of the sleep duration is not limited in this application. The terminal may not monitor the PDCCH in the sleep duration, to reduce power consumption overheads.

DRX configuration generally considers balance between energy saving and a delay.

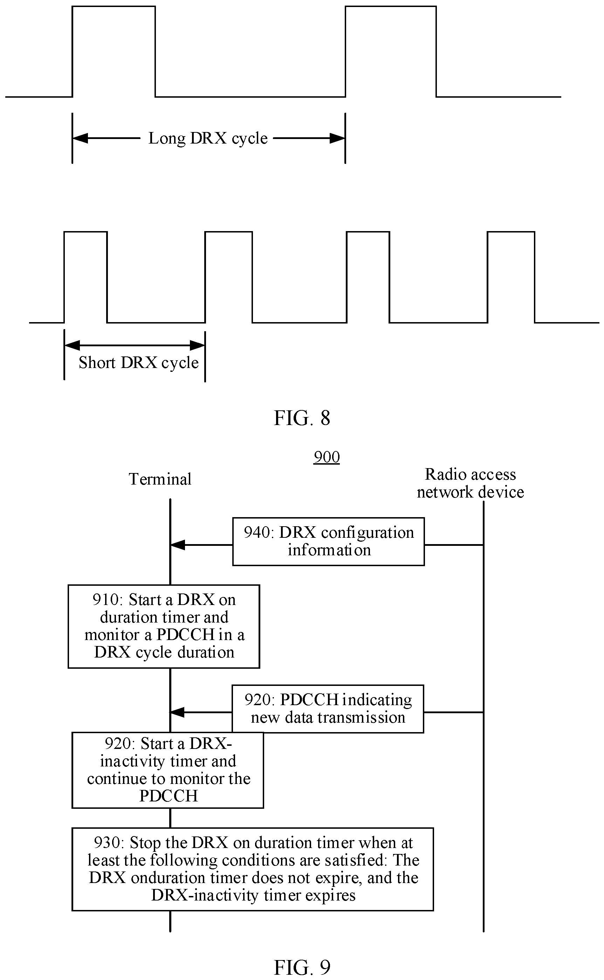

For setting of a length of the DRX cycle, a long length of the DRX cycle helps reduce power consumption of the terminal, but is not conducive to quick response to data receiving and sending; and a short length of the DRX cycle is more conducive to quick response to data receiving and sending, but is not conducive to saving power consumption of the terminal. Therefore, different lengths of the DRX cycle may be configured based on an actual requirement. FIG. 8 is used as an example. Two lengths of the DRX cycle may be configured for the terminal, namely, a long DRX cycle and a short DRX cycle. The configuration of the long DRX cycle is more conducive to power saving of the terminal, and the configuration of the short DRX cycle is more conducive to quick response of the terminal to data receiving and sending. At a moment, the terminal may use one of the two DRX configurations as required. It may be understood that the DRX cycle mentioned in this application may be a long DRX cycle, or may be a short DRX cycle. This is not limited in this application.

For setting of a length of the on duration in the DRX cycle duration, a short length of the on duration is conducive to saving power consumption of the terminal, but is not conducive to quick response to data receiving and sending; and a long length of the on duration is more conducive to quick response to data receiving and sending, but is not conducive to saving power consumption of the terminal. To adapt to the jitter that exists at the arrival moment of the data frame of the XR service, the length of the on duration in the DRX cycle duration generally needs to be set to cover a time range at which the data frame may arrive.

For example, in an XR service of 60 FPS, a value of the jitter at the arrival moment of the data frame complies with a truncated Gaussian distribution with an average value of 0, a standard deviation of 2 ms, and a value range from -4 ms to 4 ms. The length of the on duration in the DRX cycle duration needs to be set to 8 ms, so that the time range (-4 ms to 4 ms) at which the data frame may arrive can be covered. In this case, if a periodic data frame arrives in advance, after transmission of the data frame is completed, the terminal still needs to continue to monitor the PDCCH in a remaining time length of the on duration, and consequently, power consumption is increased.

This application mainly provides a DRX method to deal with data frame jitter. When at least the following conditions are satisfied: a DRX on duration timer started in a current DRX cycle duration does not expire, and a DRX-inactivity timer started in the current DRX cycle duration expires, the DRX on duration timer started in the current DRX cycle duration is stopped, so that unnecessary PDCCH monitoring can be reduced, power consumption of a terminal can be reduced, and a battery life of the terminal can be prolonged. It may be understood that the method provided in this application does not limit a data service type to which the method is applied, and is also applicable to a data service type other than XR data and/or video service data.

FIG. 9 is an interaction diagram of a DRX method 900 according to an embodiment of this application. In FIG. 9, the method is described by using an example in which a radio access network device and a terminal perform interaction. However, an execution body of the interaction is not limited in this application. For example, the radio access network device in FIG. 9 may alternatively be a chip, a chip system, or a processor that supports the radio access network device in implementing the method, or may be a logical module or software that can implement all or some functions of the radio access network device. The terminal in FIG. 9 may alternatively be a chip, a chip system, or a processor that supports the terminal in implementing the method, or may be a logical module or software that can implement all or some functions of the terminal. As shown in FIG. 9, the method 900 in this embodiment may include a part 910, a part 920, and a part 930.

Part 910: The terminal starts a DRX on duration timer and monitors a PDCCH in a DRX cycle duration.

As shown in FIG. 7 and FIG. 8, a DRX mechanism is generally configured in a cycle manner, and the DRX cycle duration herein may be understood as a DRX cycle duration. A time length of the DRX on duration timer (which may be represented as drx-onDurationTimer) is equal to a time length of an on duration in the DRX cycle duration, and time at which the DRX on duration timer is started may be understood as start time of the DRX cycle duration. After the DRX on duration timer is started, when the DRX on duration timer is in a running state when running duration does not reach the time length of the DRX on duration timer, where the running duration corresponds to the on duration in the DRX cycle duration, the terminal may monitor the PDCCH. When the DRX on duration timer expires (after running to the time length of the DRX on duration timer), this may be understood as that the on duration in the DRX cycle duration ends, and the terminal enters a sleep duration, and may not monitor the PDCCH, to reduce power consumption overheads.

Part 920: When the PDCCH indicating new data transmission is detected in the DRX cycle duration, the terminal starts a DRX-inactivity timer, and continues to monitor the PDCCH.

That the PDCCH indicates new data transmission may be understood as follows: Downlink control information (downlink control information, DCI) carried by the PDCCH includes an indicator indicating new data transmission. It may be understood that the new data transmission herein is relative to data retransmission. For example, the DCI that is carried by the PDCCH and that is for scheduling data transmission includes a new data indicator (new data indicator), and the indicator may indicate new data transmission.

A time length of the DRX-inactivity timer (which may be represented as drx-InactivityTimer) may be understood as a time length of an activation period after the terminal is scheduled. In the activation period, the terminal may continue to monitor the PDCCH. Generally, after being scheduled to send or receive newly transmitted data, the terminal may continue to be scheduled subsequently. Therefore, after the terminal is scheduled to perform new data transmission, the DRX-inactivity timer is started, so that the terminal can continue to monitor the PDCCH, so that a scheduling delay can be reduced, and the terminal can detect, in a more timely manner, the DCI that is carried by the PDCCH and that is for scheduling data transmission. After the DRX-inactivity timer is started, and when the DRX-inactivity timer is in a running state when running duration does not reach the time length of the DRX-inactivity timer, the terminal may continue to monitor the PDCCH. When the DRX-inactivity timer expires (after running to the time length of the DRX-inactivity timer), this may be understood as that the activation period ends. If the terminal has entered the sleep duration in this case, the terminal may not monitor the PDCCH, to reduce power consumption overheads.

Starting the DRX-inactivity timer in the DRX cycle duration described in this application may be understood as starting the DRX-inactivity timer in the DRX cycle duration for the first time, or may be understood as starting the DRX-inactivity timer in the DRX cycle duration, where a previously run DRX-inactivity timer has expired.

Part 930: The terminal stops the DRX on duration timer when at least the following conditions are satisfied:
The DRX on duration timer does not expire, and the DRX-inactivity timer expires.

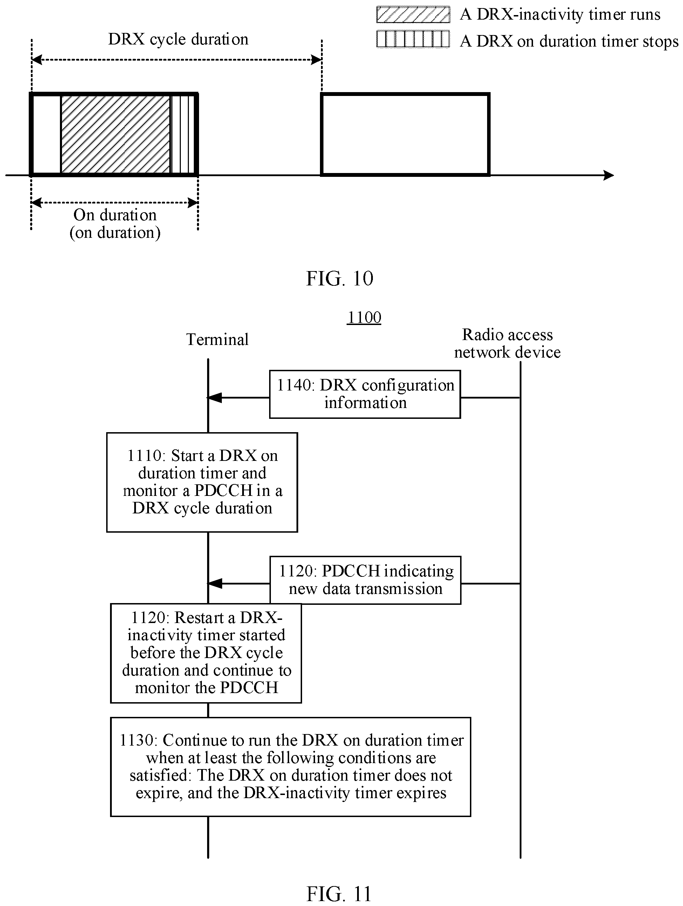

FIG. 10 is used as an example to describe the foregoing method. FIG. 10 shows a DRX cycle duration and an on duration in the DRX cycle duration. The terminal starts the DRX on duration timer at start time of the DRX cycle duration, and monitors the PDCCH in the on duration. When the PDCCH indicating new data transmission is detected in the DRX cycle duration, the terminal starts the DRX-inactivity timer and continues to monitor the PDCCH. A shadow part with diagonal lines in FIG. 10 indicates that the DRX-inactivity timer is in a running state. When the DRX-inactivity timer expires (after the shadow part with diagonal lines ends), and the DRX on duration timer does not expire (end time of the on duration is not reached), the terminal stops the DRX on duration timer. A shadow part with vertical lines in FIG. 10 indicates a range in which the foregoing DRX on duration timer that is originally running is stopped.

According to the foregoing method, after the terminal completes receiving or sending, in the DRX cycle duration, a data frame having jitter, a redundant part in an on duration is allowed to be stopped, and this may be considered as that the terminal enters a sleep state in advance, thereby reducing unnecessary PDCCH monitoring, reducing power consumption of the terminal, and prolonging a battery life of the terminal.

The method 900 further includes an optional part 940: The radio access network device sends DRX configuration information to the terminal, where the DRX on duration timer started in the DRX cycle duration is configured, based on the DRX configuration information, to stop when at least the following conditions are satisfied: The DRX on duration timer does not expire, and the DRX-inactivity timer started in the DRX cycle duration expires. Correspondingly, the terminal receives the DRX configuration information. The part 930 of the method 900 may be specifically implemented as follows: Determine, based on the DRX configuration information, to stop the DRX on duration timer when at least the foregoing conditions are satisfied.

The DRX configuration information may be, for example, a DRX-Config information element. The DRX-Config information element includes a first field, and the DRX on duration timer started in the DRX cycle duration is configured, based on the first field, to stop when at least the foregoing conditions are satisfied. After receiving the DRX-Config information element, the terminal may determine, based on the first field in the DRX-Config information element, to stop the DRX on duration timer when at least the foregoing conditions are satisfied. The first field may be understood as a function of enabling or disabling a function 1. The function 1 may be described as stopping, when at least the foregoing conditions are satisfied, the DRX on duration timer started in the DRX cycle duration. When the first field is set to a predetermined value, it indicates that the function 1 is enabled. When the first field is set to another predetermined value, it indicates that the function 1 is not enabled. Alternatively, when the first field exists, it indicates that the function 1 is enabled. When the first field does not exist, it indicates that the function 1 is not enabled.

For example, the first field is represented as drx-Inactivity_Timer_Ending_On_Duration_Timer (it may be understood that another name used by the first field is not limited in this application), and the first field may be represented in the DRX-Config information element as follows: 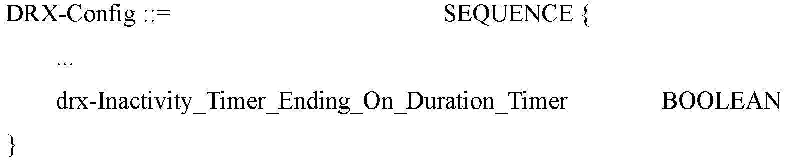 An example in which a value of the first field is a Boolean value (for example, true or false) is used (it may be understood that another manner of setting the value of the first field is not limited in this application). For example, when the first field is set to true, it indicates that the function 1 is enabled. When the first field is set to another predetermined value, it indicates that the function 1 is not enabled. Alternatively, when the first field is set to false, it indicates that the function 1 is enabled. When the first field is set to true, it indicates that the function 1 is not enabled.

According to the foregoing method, configuration information having an enabling/disabling function is introduced to enable the foregoing function 1, so that a service transmission requirement can be more flexibly adapted.

In the method 900, after the part 920, optionally, the method further includes: When the PDCCH indicating new data transmission is detected, the terminal restarts the DRX-inactivity timer, and continues to monitor the PDCCH. After the terminal is scheduled to receive or send data, the DRX-inactivity timer is restarted, so that the terminal may continue to be scheduled in a next period of time. Therefore, according to the method, data scheduling of the terminal in a period of time can be completed in a more timely manner, a data transmission delay is reduced, and experience of a terminal user is improved.

In the method 900, after the part 930, optionally, the method further includes: The terminal monitors the PDCCH when one or both of the following timers are running and do not expire: a DRX downlink retransmission timer and a DRX uplink retransmission timer. A time length of the DRX downlink retransmission timer (which may be represented as drx-RetransmissionTimerDL) may be understood as a maximum time length of receiving downlink retransmission, and a time length of the DRX uplink retransmission timer (which may be represented as drx-RetransmissionTimerUL) may be understood as a maximum time length of receiving an uplink retransmission grant. Optionally, the time length of the DRX downlink retransmission timer and/or the time length of the DRX uplink retransmission timer are/is configured by the radio access network device. For example, the time length of the DRX downlink retransmission timer and/or the time length of the DRX uplink retransmission timer may be configured based on the DRX configuration information (for example, the DRX-Config information element) in the part 940. According to the method, retransmission of data that is incorrectly transmitted can be completed as soon as possible, to reduce a data transmission delay and improve experience of a terminal user.

In a possible implementation of the method 900, a time length of the DRX on duration timer and a time length of the DRX-inactivity timer are configured by the radio access network device. For example, the time length of the DRX on duration timer and the time length of the DRX-inactivity timer may be configured based on the DRX configuration information (for example, the DRX-Config information element) in the part 940. In this implementation, a time length of a timer can match a feature of service data as much as possible, so that data is received or sent as completely and in a timely manner as possible while power consumption of the terminal is reduced, thereby improving experience of a terminal user.

FIG. 11 is an interaction diagram of another DRX method 1100 according to an embodiment of this application. In FIG. 11, the method is described by using an example in which a radio access network device and a terminal perform interaction. However, an execution body of the interaction is not limited in this application. For example, the radio access network device in FIG. 11 may alternatively be a chip, a chip system, or a processor that supports the radio access network device in implementing the method, or may be a logical module or software that can implement all or some functions of the radio access network device. The terminal in FIG. 11 may alternatively be a chip, a chip system, or a processor that supports the terminal in implementing the method, or may be a logical module or software that can implement all or some functions of the terminal. As shown in FIG. 11, the method 1100 in this embodiment may include a part 1110, a part 1120, and a part 1130.

Part 1110: The terminal starts a DRX on duration timer and monitors a PDCCH in a DRX cycle duration. For detailed descriptions in this part, refer to corresponding descriptions in the part 910 in the method 900. Details are not described herein again.

Part 1120: When the PDCCH indicating new data transmission is detected in the DRX cycle duration, the terminal restarts a DRX-inactivity timer started before the DRX cycle duration, and continues to monitor the PDCCH.

The restarting the DRX-inactivity timer in the DRX cycle duration described in this application may be understood as that when the DRX-inactivity timer is restarted in the DRX cycle duration, a previously run DRX-inactivity timer does not expire.

For detailed descriptions of other content in this part, refer to corresponding descriptions in the part 920 in the method 900. Details are not described herein again.

Part 1130: The terminal continues to run the DRX on duration timer when at least the following conditions are satisfied: The DRX on duration timer does not expire, and the DRX-inactivity timer expires.

It may be understood that the method 1100 may alternatively not include the part 1120. In this case, the conditions that need to be satisfied in the part 1130 may be replaced with: The DRX on duration timer does not expire, and a DRX-inactivity timer started before the DRX cycle duration expires.

A scenario to which the method 1100 is applicable may be understood as that a DRX-inactivity timer started before a current DRX cycle duration continues to run in the current DRX cycle duration.

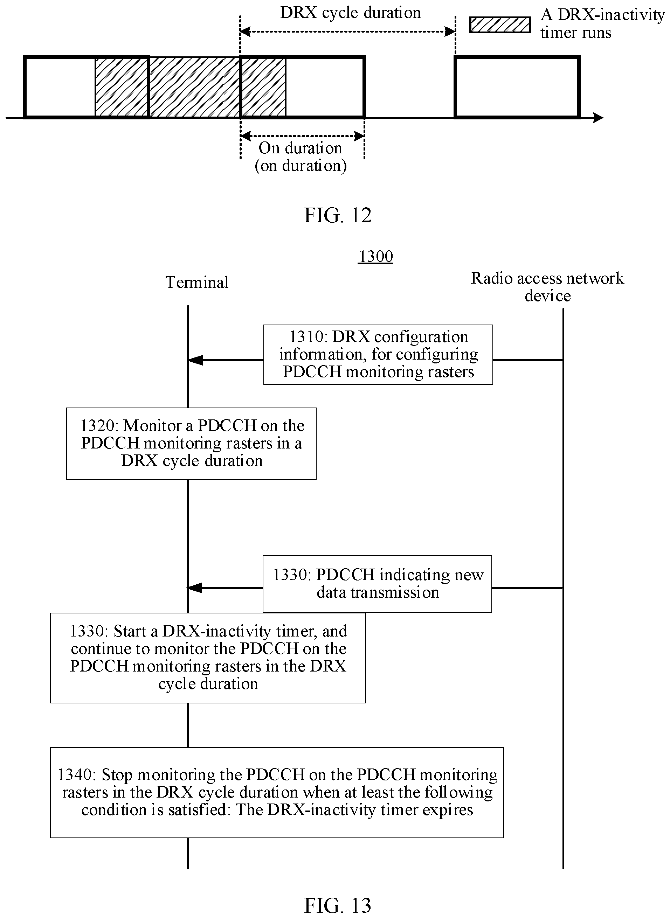

FIG. 12 is used as an example to describe the foregoing method. FIG. 12 shows a DRX cycle duration and an on duration in the DRX cycle duration. A DRX-inactivity timer started before the DRX cycle duration continues to run in the DRX cycle duration. The terminal starts a DRX on duration timer at start time of the DRX cycle duration, and monitors a PDCCH in the on duration.

When the PDCCH indicating new data transmission is detected in the DRX cycle duration, the terminal restarts the DRX-inactivity timer started before the DRX cycle duration, and continues to monitor the PDCCH. A shadow part with diagonal lines in FIG. 12 indicates that the DRX-inactivity timer is in a running state. When the DRX-inactivity timer expires (after the shadow part with diagonal lines ends), and the DRX on duration timer does not expire (end time of the on duration is not reached), the terminal continues to run the DRX on duration timer until the DRX on duration timer expires.

When the PDCCH indicating new data transmission is not detected in the DRX cycle duration, and the DRX on duration timer does not expire (end time of the on duration is not reached) and the DRX-inactivity timer started before the DRX cycle duration expires (after the shadow part with diagonal lines ends), the terminal continues to run the DRX on duration timer until the DRX on duration timer expires.

According to the foregoing method, the terminal may continue to monitor the PDCCH in a current DRX cycle duration without being affected by a DRX-inactivity timer started in a previous DRX cycle duration, so that data transmission in the current DRX cycle duration is not affected by the DRX-inactivity timer started in the previous DRX cycle duration, thereby improving overall data transmission efficiency.

The method 1100 further includes an optional part 1140: The radio access network device sends DRX configuration information to the terminal, where the DRX on duration timer started in the DRX cycle duration is configured, based on the DRX configuration information, to continue to run when at least the following conditions are satisfied: The DRX on duration timer does not expire, and the DRX-inactivity timer started before the DRX cycle duration expires. Correspondingly, the terminal receives the DRX configuration information. The part 1130 of the method 1100 may be specifically implemented as follows: Determine, based on the DRX configuration information, to continue to run the DRX on duration timer when at least the foregoing conditions are satisfied.

The DRX configuration information may be, for example, a DRX-Config information element. The DRX-Config information element includes a second field, and the DRX on duration timer started in the DRX cycle duration is configured, based on the second field, to continue to run when at least the foregoing conditions are satisfied. After receiving the DRX-Config information element, the terminal may determine, based on the second field in the DRX-Config information element, to continue to run the DRX on duration timer when at least the foregoing conditions are satisfied. The second field may be understood as a function of enabling or disabling a function 2. The function 2 may be described as continuing to run, when at least the foregoing conditions are satisfied, the DRX on duration timer started in the DRX cycle duration. When the second field is set to a predetermined value, it indicates that the function 2 is enabled. When the second field is set to another predetermined value, it indicates that the function 2 is not enabled. Alternatively, when the second field exists, it indicates that the function 2 is enabled. When the second field does not exist, it indicates that the function 2 is not enabled.

According to the foregoing method, configuration information having an enabling/disabling function is introduced to enable the foregoing function 2, so that a service transmission requirement can be more flexibly adapted.

In the method 1100, after the part 1120, optionally, the method further includes: when the PDCCH indicating new data transmission is detected, restarting the DRX-inactivity timer, and continuing to monitor the PDCCH.

In the method 1100, after the part 1130, optionally, the method further includes: monitoring the PDCCH when one or both of the following timers are running and do not expire: a DRX downlink retransmission timer and a DRX uplink retransmission timer. For descriptions of the DRX downlink retransmission timer and the DRX uplink retransmission timer, refer to corresponding descriptions in the method 900. Details are not described herein again. Optionally, a time length of the DRX downlink retransmission timer and/or a time length of the DRX uplink retransmission timer are/is configured by the radio access network device. For example, the time length of the DRX downlink retransmission timer and/or the time length of the DRX uplink retransmission timer may be configured based on the DRX configuration information (for example, the DRX-Config information element) in the part 1140.

In a possible implementation of the method 1100, a time length of the DRX on duration timer and a time length of the DRX-inactivity timer are configured by the radio access network device. For example, the time length of the DRX on duration timer and the time length of the DRX-inactivity timer may be configured based on the DRX configuration information (for example, the DRX-Config information element) in the part 1140.

For beneficial effects of similar features/steps in the method 1100 and the method 900, refer to corresponding descriptions in the method 900. Details are not described herein again.

FIG. 13 is an interaction diagram of another DRX method 1300 according to an embodiment of this application. In FIG. 13, the method is described by using an example in which a radio access network device and a terminal perform interaction. However, an execution body of the interaction is not limited in this application. For example, the radio access network device in FIG. 13 may alternatively be a chip, a chip system, or a processor that supports the radio access network device in implementing the method, or may be a logical module or software that can implement all or some functions of the radio access network device. The terminal in FIG. 13 may alternatively be a chip, a chip system, or a processor that supports the terminal in implementing the method, or may be a logical module or software that can implement all or some functions of the terminal. As shown in FIG. 13, the method 1300 in this embodiment may include a part 1310, a part 1320, a part 1330, and a part 1340.

Part 1310: The radio access network device sends DRX configuration information to the terminal, where PDCCH monitoring rasters (rasters) for monitoring a PDCCH are configured based on the DRX configuration information. Correspondingly, the terminal receives the DRX configuration information.

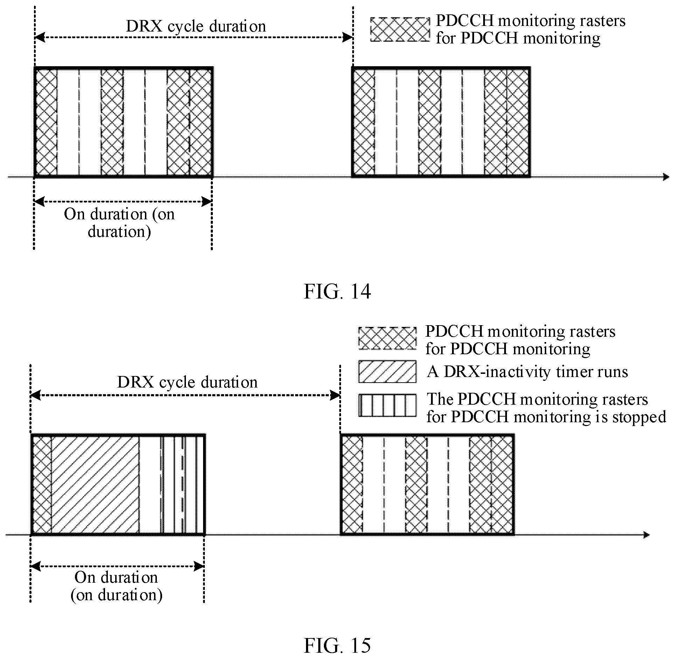

Configured PDCCH monitoring rasters are located in an on duration in a DRX cycle duration. On these configured PDCCH monitoring rasters, the terminal may monitor the PDCCH. In another time in the on duration, the terminal does not monitor the PDCCH, to further reduce power consumption. These configured PDCCH monitoring rasters for monitoring the PDCCH may be continuously distributed or discretely distributed in a time dimension of the on duration. This is not limited in this application. The PDCCH monitoring raster may also be referred to as a PDCCH monitoring time window, a PDCCH monitoring sub-time period, or a PDCCH monitoring sub-occurrence. A name of the PDCCH monitoring raster is not limited in this application. FIG. 14 is used as an example. An on duration in a DRX cycle duration includes four configured PDCCH monitoring rasters (a shadow part with cross lines) for monitoring a PDCCH. In an on duration of the DRX cycle duration, a terminal may monitor the PDCCH on four PDCCH monitoring rasters, and does not monitor the PDCCH in another time in the on duration.

The DRX configuration information may be, for example, a DRX-Config information element. The DRX-Config information element includes a third field, and the PDCCH monitoring rasters for monitoring the PDCCH are configured based on the third field. For example, the third field corresponds to bitmap information, and the PDCCH monitoring rasters for monitoring the PDCCH are configured based on the bitmap information. For another example, the third field corresponds to index information, and the PDCCH monitoring rasters for monitoring the PDCCH are configured based on the index information.

Part 1320: The terminal monitors the PDCCH on the PDCCH monitoring rasters in the DRX cycle duration.

Part 1330: When the PDCCH indicating new data transmission is detected in the DRX cycle duration, the terminal starts a DRX-inactivity timer, and continues to monitor the PDCCH on the PDCCH monitoring rasters in the DRX cycle duration.

For detailed descriptions related to this part, refer to corresponding descriptions in the part 920 in the method 900. Details are not described herein again.

Part 1340: The terminal stops monitoring the PDCCH on the PDCCH monitoring rasters in the DRX cycle duration when at least the following condition is satisfied:
The DRX-inactivity timer expires.

FIG. 15 is used as an example to describe the foregoing method. FIG. 15 shows a DRX cycle duration, an on duration in the DRX cycle duration, and PDCCH monitoring rasters for monitoring a PDCCH in the on duration. The terminal monitors the PDCCH on the PDCCH monitoring rasters in the DRX cycle duration. When the PDCCH indicating new data transmission is detected in the DRX cycle duration, the terminal starts the DRX-inactivity timer and continues to monitor the PDCCH. A shadow part with diagonal lines in FIG. 15 indicates that the DRX-inactivity timer is in a running state. When the DRX-inactivity timer expires (after the shadow part with diagonal lines ends), the terminal stops monitoring the PDCCH on remaining PDCCH monitoring rasters in the DRX cycle duration. A shadow part with vertical lines in FIG. 15 represents PDCCH rasters for originally performing PDCCH monitoring.

According to the foregoing method, after the terminal completes receiving or sending, in the DRX cycle duration, a data frame having jitter, PDCCH monitoring on a remaining PDCCH monitoring raster in the on duration is allowed to be stopped, and this may be considered as that the terminal enters a sleep state in advance, thereby reducing unnecessary PDCCH monitoring, reducing power consumption of the terminal, and prolonging a battery life of the terminal.

In the method 1300, after the part 1330, optionally, the method further includes: When the PDCCH indicating new data transmission is detected, the terminal restarts the DRX-inactivity timer, and continues to monitor the PDCCH on the PDCCH monitoring rasters. After the terminal is scheduled to receive or send data, the DRX-inactivity timer is restarted, so that the terminal may continue to be scheduled in a next period of time. Therefore, according to the method, data scheduling of the terminal in a period of time can be completed in a more timely manner, a data transmission delay is reduced, and experience of a terminal user is improved.

In the method 1300, after the part 1340, optionally, the method further includes: The terminal monitors the PDCCH in the DRX cycle duration when one or both of the following timers are running and do not expire: a DRX downlink retransmission timer and a DRX uplink retransmission timer. For specific descriptions of the DRX downlink retransmission timer and the DRX uplink retransmission timer, refer to corresponding descriptions in the method 900. Details are not described herein again. Optionally, a time length of the DRX downlink retransmission timer and/or a time length of the DRX uplink retransmission timer are/is further configured based on the DRX configuration information (for example, the DRX-Config information element). According to the method, retransmission of data that is incorrectly transmitted can be completed as soon as possible, to reduce a data transmission delay and improve experience of a terminal user.

In a possible implementation of the method 1300, a time length of the DRX-inactivity timer is further configured based on the DRX configuration information (for example, the DRX-Config information element). In this implementation, a time length of a timer can match a feature of service data as much as possible, so that data is received or sent as completely and in a timely manner as possible while power consumption of the terminal is reduced, thereby improving experience of a terminal user.

In a possible implementation of the method 1300, the PDCCH monitoring on the PDCCH monitoring rasters in the DRX cycle duration is further configured, based on the DRX configuration information, to stop when at least the following condition is satisfied: The DRX-inactivity timer started in the DRX cycle duration expires. The part 1340 of the method 1300 may be specifically implemented as follows: Determine, based on the DRX configuration information, to stop monitoring the PDCCH on the PDCCH monitoring rasters in the DRX cycle duration when at least the foregoing condition is satisfied.

The DRX configuration information may be, for example, the DRX-Config information element. The DRX-Config information element includes a fourth field, and the PDCCH monitoring on the PDCCH monitoring rasters in the DRX cycle duration is configured, based on the fourth field, to stop when at least the foregoing condition is satisfied. After receiving the DRX-Config information element, the terminal may determine, based on the fourth field in the DRX-Config information element, to stop monitoring the PDCCH on the PDCCH monitoring rasters in the DRX cycle duration when at least the foregoing condition is satisfied. The fourth field may be understood as a function of enabling or disabling a function 3. The function 3 may be described as stopping, when at least the foregoing condition is satisfied, the PDCCH monitoring on the PDCCH monitoring rasters in the DRX cycle duration. When the fourth field is set to a predetermined value, it indicates that the function 3 is enabled. When the fourth field is set to another predetermined value, it indicates that the function 3 is not enabled. Alternatively, when the fourth field exists, it indicates that the function 3 is enabled. When the fourth field does not exist, it indicates that the function 3 is not enabled.

For example, the fourth field is represented as drx-Inactivity_Timer_Ending_DODR (it may be understood that another name used by the fourth field is not limited in this application), and the fourth field may be represented in the DRX-Config information element as follows:

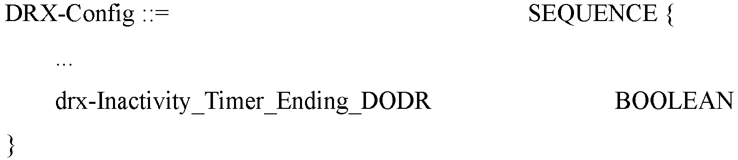

An example in which a value of the fourth field is a Boolean value (for example, true or false) is used (it may be understood that another manner of setting the value of the fourth field is not limited in this application). For example, when the fourth field is set to true, it indicates that the function 3 is enabled. When the fourth field is set to another predetermined value, it indicates that the function 3 is not enabled. Alternatively, when the fourth field is set to false, it indicates that the function 3 is enabled. When the fourth field is set to true, it indicates that the function 3 is not enabled.

According to the foregoing method, configuration information having an enabling/disabling function is introduced to enable the foregoing function 3, so that a service transmission requirement can be more flexibly adapted.

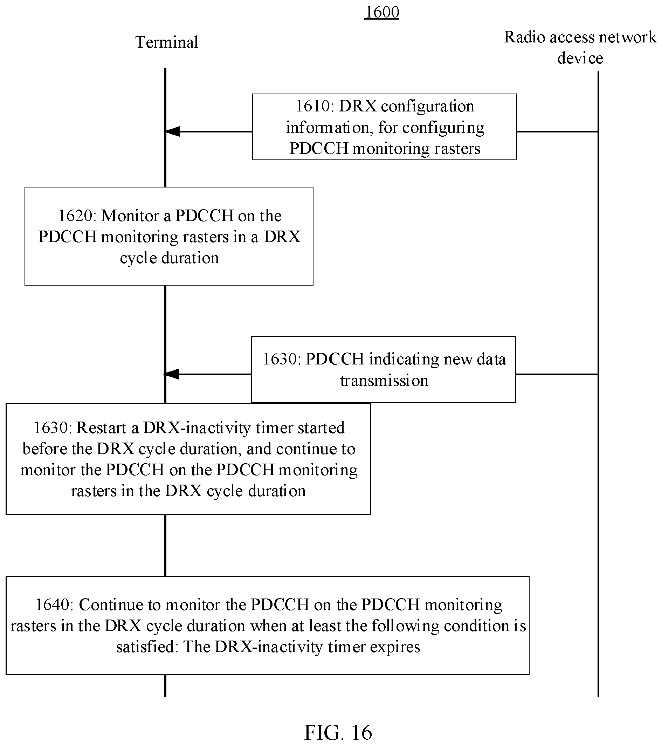

FIG. 16 is an interaction diagram of another DRX method 1600 according to an embodiment of this application. In FIG. 16, the method is described by using an example in which a radio access network device and a terminal perform interaction. However, an execution body of the interaction is not limited in this application. For example, the radio access network device in FIG. 16 may alternatively be a chip, a chip system, or a processor that supports the radio access network device in implementing the method, or may be a logical module or software that can implement all or some functions of the radio access network device. The terminal in FIG. 16 may alternatively be a chip, a chip system, or a processor that supports the terminal in implementing the method, or may be a logical module or software that can implement all or some functions of the terminal. As shown in FIG. 16, the method 1600 in this embodiment may include a part 1610, a part 1620, a part 1630, and a part 1640.

Part 1610: The radio access network device sends DRX configuration information to the terminal, where PDCCH monitoring rasters for monitoring a PDCCH are configured based on the DRX configuration information. Correspondingly, the terminal receives the DRX configuration information.

The DRX configuration information may be, for example, a DRX-Config information element. The DRX-Config information element includes a fifth field, and the PDCCH monitoring rasters for monitoring the PDCCH are configured based on the fifth field. For example, the fifth field corresponds to bitmap information, and the PDCCH monitoring rasters for monitoring the PDCCH are configured based on the bitmap information. For another example, the fifth field corresponds to index information, and the PDCCH monitoring rasters for monitoring the PDCCH are configured based on the index information.

For other detailed descriptions in this part, refer to corresponding descriptions in the part 1310 in the method 1300. Details are not described herein again.

Part 1620: The terminal monitors the PDCCH on PDCCH monitoring rasters in the DRX cycle duration.

Part 1630: When the PDCCH indicating new data transmission is detected in the DRX cycle duration, the terminal restarts a DRX-inactivity timer started before the DRX cycle duration, and continues to monitor the PDCCH on the PDCCH monitoring rasters in the DRX cycle duration. For descriptions of restarting the DRX-inactivity timer in this part, refer to corresponding descriptions in the part 1120 of the method 1100. For detailed descriptions of other content, refer to descriptions in the part 1330 of the method 1300. Details are not described herein again.

Part 1640: The terminal continues to monitor the PDCCH on the PDCCH monitoring rasters in the DRX cycle duration when at least the following condition is satisfied:
The DRX-inactivity timer expires.

It may be understood that the method 1600 may alternatively not include the part 1630. In this case, the condition that needs to be satisfied in the part 1640 may be replaced with: A DRX-inactivity timer started before the DRX cycle duration expires.

A scenario to which the method 1600 is applicable may be understood as that a DRX-inactivity timer started before a current DRX cycle duration continues to run in the current DRX cycle duration.

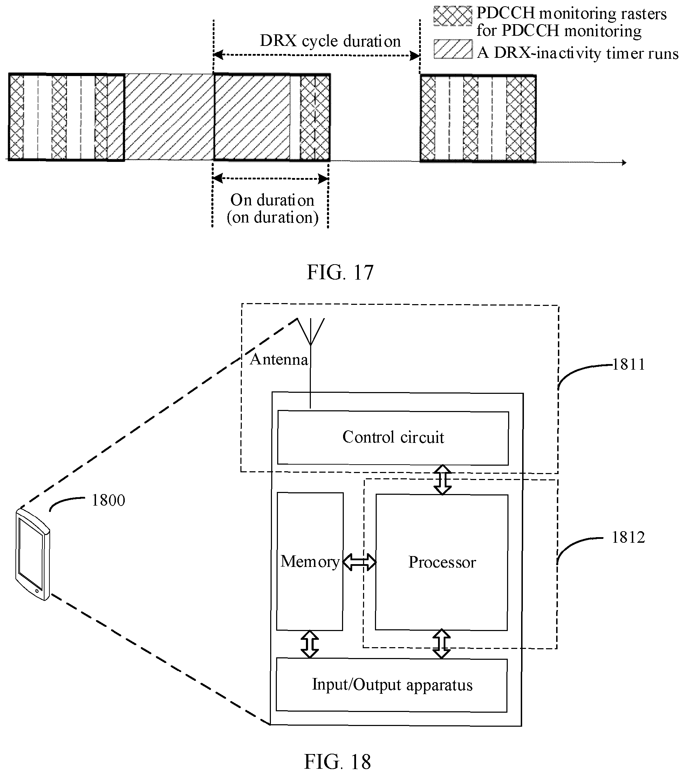

FIG. 17 is used as an example to describe the foregoing method. FIG. 17 shows a DRX cycle duration, an on duration in the DRX cycle duration, and PDCCH monitoring rasters for monitoring a PDCCH in the on duration. A DRX-inactivity timer started before the DRX cycle duration continues to run in the DRX cycle duration. The terminal monitors the PDCCH on the PDCCH monitoring rasters in the DRX cycle duration.

When the PDCCH indicating new data transmission is detected on the PDCCH monitoring rasters in the DRX cycle duration, the terminal restarts the DRX-inactivity timer started before the DRX cycle duration, and continues to monitor the PDCCH. A shadow part with diagonal lines in FIG. 17 indicates that the DRX-inactivity timer is in a running state. When the DRX-inactivity timer expires (after the shadow part with diagonal lines ends), the terminal continues to monitor the PDCCH on remaining PDCCH monitoring rasters in the DRX cycle duration.

If no PDCCH indicating new data transmission is detected on the PDCCH monitoring rasters in the DRX cycle duration, the terminal continues to monitor the PDCCH on the remaining PDCCH monitoring rasters in the DRX cycle duration when the DRX-inactivity timer started before the DRX cycle duration expires (after the shadow part with diagonal lines ends).

According to the foregoing method, the terminal may continue to monitor the PDCCH on the PDCCH monitoring rasters in a current DRX cycle duration without being affected by a DRX-inactivity timer started in a previous DRX cycle duration, so that data transmission in the current DRX cycle duration is not affected by the DRX-inactivity timer started in the previous DRX cycle duration, thereby improving overall data transmission efficiency.

In the method 1600, after the part 1630, optionally, the method further includes: When the PDCCH indicating new data transmission is detected, the terminal restarts the DRX-inactivity timer, and continues to monitor the PDCCH on the PDCCH monitoring rasters.

In the method 1600, after the part 1640, optionally, the method further includes: The terminal monitors the PDCCH in the DRX cycle duration when one or both of the following timers are running and do not expire: a DRX downlink retransmission timer and a DRX uplink retransmission timer. For specific descriptions of the DRX downlink retransmission timer and the DRX uplink retransmission timer, refer to corresponding descriptions in the method 900. Details are not described herein again. Optionally, a time length of the DRX downlink retransmission timer and/or a time length of the DRX uplink retransmission timer are/is further configured based on the DRX configuration information (for example, the DRX-Config information element).

In a possible implementation of the method 1600, a time length of the DRX-inactivity timer is further configured based on the DRX configuration information (for example, the DRX-Config information element).

In a possible implementation of the method 1600, the PDCCH monitoring on the PDCCH monitoring rasters in the DRX cycle duration is further configured, based on the DRX configuration information, to continue to be performed when at least the following condition is satisfied: The DRX-inactivity timer started before the DRX cycle duration expires. The part 1640 of the method 1600 may be specifically implemented as follows: Determine, based on the DRX configuration information, to continue to monitor the PDCCH on the PDCCH monitoring rasters in the DRX cycle duration when at least the foregoing condition is satisfied.

The DRX configuration information may be, for example, the DRX-Config information element. The DRX-Config information element includes a sixth field, and the PDCCH monitoring on the PDCCH monitoring rasters in the DRX cycle duration is configured, based on the sixth field, to continue to be performed when at least the foregoing condition is satisfied. After receiving the DRX-Config information element, the terminal may determine, based on the sixth field in the DRX-Config information element, to continue to monitor the PDCCH on the PDCCH monitoring rasters in the DRX cycle duration when at least the foregoing condition is satisfied. The sixth field may be understood as a function of enabling or disabling a function 4, and the function 4 may be described as continuing to perform the PDCCH monitoring on the PDCCH monitoring rasters in the DRX cycle duration when at least the condition is satisfied. When the sixth field is set to a predetermined value, it indicates that the function 4 is enabled. When the sixth field is set to another predetermined value, it indicates that the function 4 is not enabled. Alternatively, when the sixth field exists, it indicates that the function 4 is enabled. When the sixth field does not exist, it indicates that the function 4 is not enabled.

According to the foregoing method, configuration information having an enabling/disabling function is introduced to enable the foregoing function 4, so that a service transmission requirement can be more flexibly adapted.

Corresponding to the method provided in the foregoing method embodiments, embodiments of this application further provide a corresponding apparatus, including corresponding modules configured to execute the foregoing embodiments. The module may be software, hardware, or a combination of software and hardware.

FIG. 18 is a diagram of a structure of a terminal. The terminal is applicable to the scenario shown in FIG. 1, FIG. 2, FIG. 3, FIG. 4, or FIG. 5. The terminal or a component in the terminal may perform the foregoing method 900, method 1100, method 1300, method 1600, and various possible implementations. For ease of description, FIG. 18 merely shows main components of the terminal. As shown in FIG. 18, the terminal 1800 includes a processor, a memory, a control circuit, an antenna, and an input/output apparatus. The processor is mainly configured to process a communication protocol and communication data, control the entire terminal, execute a software program, and process data of the software program. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in the form of an electromagnetic wave. The input/output apparatus, such as a touchscreen, a display, or a keyboard, is mainly configured to: receive data input by a user and output data to the user.

After the terminal is powered on, the processor may read a software program in a storage unit, interpret and execute instructions of the software program, and process data of the software program. When data needs to be sent in a wireless manner, the processor performs baseband processing on the to-be-sent data, and outputs a baseband signal to the radio frequency circuit. The radio frequency circuit processes the baseband signal to obtain a radio frequency signal, and sends the radio frequency signal to the outside in the form of an electromagnetic wave through the antenna. When data is sent to the terminal, the radio frequency circuit receives the radio frequency signal through the antenna, further converts the radio frequency signal into a baseband signal, and outputs the baseband signal to the processor. The processor converts the baseband signal into data, and processes the data.

For ease of description, FIG. 18 shows only one memory and one processor. An actual terminal may include a plurality of processors and a plurality of memories. The memory may also be referred to as a storage medium, a storage device, or the like. This is not limited in embodiments of this application.

**In** an optional implementation, the processor may include a baseband processor and a central processing unit. The baseband processor is mainly configured to process the communication protocol and the communication data. The central processing unit is mainly configured to control the entire terminal device, execute the software program, and process the data of the software program. The processor in FIG. 18 integrates functions of the baseband processor and the central processing unit. A person skilled in the art may understand that the baseband processor and the central processing unit may be respectively independent processors, and are interconnected through technologies such as a bus. A person skilled in the art may understand that the terminal may include a plurality of baseband processors to adapt to different network standards, and the terminal may include a plurality of central processing units to enhance a processing capability of the terminal. All components of the terminal may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in the form of a software program, and the processor executes the software program to implement a baseband processing function.

**In** an example, the antenna and the control circuit that have a receiving function and a sending function may be considered as a transceiver unit 1811 of the terminal 1800, and the processor having a processing function may be considered as a processing unit 1812 of the terminal 1800. As shown in FIG. 18, the terminal 1800 includes the transceiver unit 1811 and the processing unit 1812. The transceiver unit may also be referred to as a transceiver, a transceiver machine, a transceiver apparatus, or the like. Optionally, a component that is in the transceiver unit 1811 and that is configured to implement a receiving function may be considered as a receiving unit, and a component that is in the transceiver unit 1811 and that is configured to implement a sending function may be considered as a sending unit. **In** other words, the transceiver unit 1811 includes the receiving unit and the sending unit. For example, the receiving unit may also be referred to as a receive machine, a receiver, or a receiving circuit, and the sending unit may also be referred to as a transmit machine, a transmitter, or a transmitting circuit. Optionally, the receiving unit and the sending unit may be one integrated unit, or may be a plurality of independent units. The receiving unit and the sending unit may be in one geographical position, or may be distributed in a plurality of geographical positions.

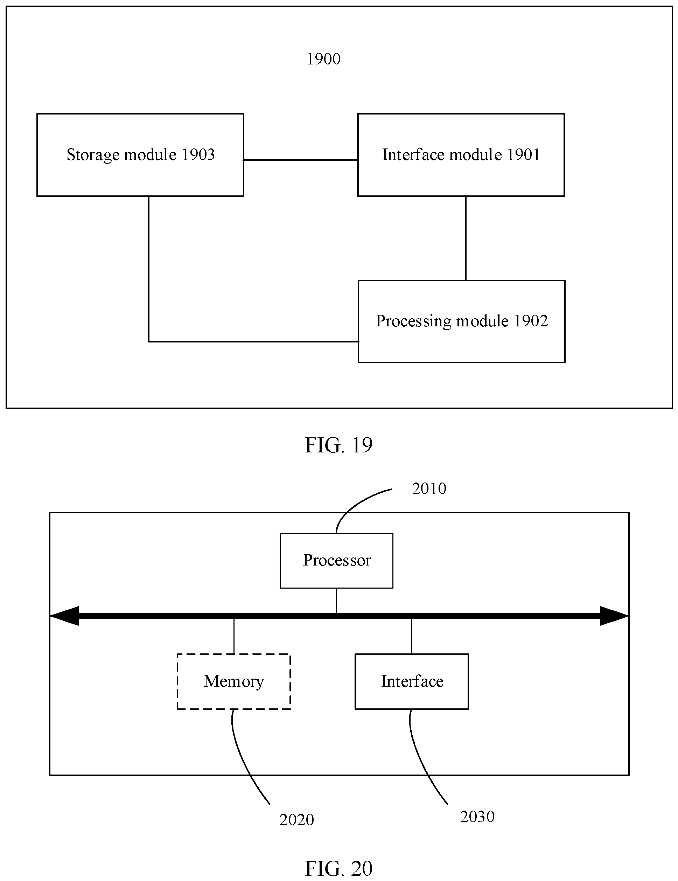

As shown in FIG. 19, still another embodiment of this application provides an apparatus 1900. The apparatus may be a terminal, or may be a component (for example, an integrated circuit or a chip) of a terminal. Alternatively, the apparatus may be a radio access network device, a component (for example, an integrated circuit or a chip) of a network device, or a logical module or software that can implement all or some functions of the radio access network device. The apparatus may alternatively be another communication module. For example, the apparatus 1900 may implement functions of the radio access network device in the method 900, the method 1100, the method 1300, the method 1600, and various possible implementations, or the apparatus 1900 may implement functions of the terminal in the method 900, the method 1100, the method 1300, the method 1600, and various possible implementations. The apparatus 1900 may include an interface module 1901 (or referred to as an interface unit) and a processing module 1902 (or referred to as a processing unit), and may further include a storage module 1903 (or referred to as a storage unit).

**In** a possible design, one or more modules in FIG. 19 may be implemented by one or more processors, may be implemented by one or more processors and one or more memories, may be implemented by one or more processors and one or more transceivers, or may be implemented by one or more processors, one or more memories, and one or more transceivers. This is not limited in this embodiment of this application. The processor, the memory, and the transceiver may be disposed separately, or may be integrated.

The apparatus has a function of implementing the terminal described in embodiments of this application. For example, the apparatus includes a corresponding module, unit, or means (means) used for the terminal to perform the steps that are related to the terminal and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments. Alternatively, the apparatus has a function of implementing the radio access network device described in embodiments of this application. For example, the apparatus includes a corresponding module, unit, or means (means) used by the radio access network device to perform the steps that are related to the radio access network device and that are described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

It may be understood that for beneficial effects corresponding to the apparatus 1900 and various possible implementations, refer to the descriptions in the foregoing method embodiments or content in the summary. Details are not described herein again.

Optionally, the apparatus 1900 may further include the storage module 1903, configured to store data or instructions (which may also be referred to as code or a program). The other modules may interact with or be coupled to the storage module, to implement corresponding methods or functions. For example, the processing module 1902 may read the data or the instructions in the storage module 1903, so that the apparatus 1900 implements the method in the foregoing embodiments.

In an example, the module in the foregoing apparatus may be one or more integrated circuits configured to implement the foregoing methods, for example, one or more application specific integrated circuits (application specific integrated circuits, ASICs), one or more microprocessors (digital signal processors, DSPs), one or more field programmable gate arrays (field programmable gate arrays, FPGAs), or a combination of at least two of these integrated circuit forms. For another example, when the module in the apparatus may be implemented by a processing element scheduling a program, the processing element may be a general-purpose processor, for example, a central processing unit (central processing unit, CPU) or another processor that can invoke the program. For still another example, the units may be integrated and implemented in the form of a system-on-a-chip (system-on-a-chip, SoC).

FIG. 20 is a diagram of an apparatus according to an embodiment of this application. The apparatus may be configured to implement the method 900 the method 1100, the method 1300, the method 1600, and various possible implementations. As shown in FIG. 20, the apparatus includes a processor 2010 and an interface 2030. The processor 2010 is coupled to the interface 2030. The interface 2030 is configured to communicate with another module or device. The interface 2030 may be a transceiver or an input/output interface. The interface 2030 may be, for example, an interface circuit. Optionally, the apparatus further includes a memory 2020, configured to store instructions executed by the processor 2010, input data required by the processor 2010 to run the instructions, or data generated after the processor 2010 runs the instructions.

The method 900, the method 1100, the method 1300, the method 1600, and various possible implementations may be implemented by the processor 2010 invoking a program or the instructions stored in the memory 2020. The memory 2020 may be inside the apparatus, or may be outside the apparatus. This is not limited in this application.

Optionally, a function/implementation process of the interface module 1901 and the processing module 1902 in FIG. 19 may be implemented by the processor 2010 in the apparatus shown in FIG. 20. Alternatively, a function/implementation process of the processing module 1902 in FIG. 19 may be implemented by the processor 2010 in the apparatus shown in FIG. 20, and a function/implementation process of the interface module 1901 in FIG. 19 may be implemented by the interface 2030 in the apparatus shown in FIG. 20. For example, the function/implementation process of the interface module 1901 may be implemented by the processor invoking program instructions in the memory to drive the interface 2030.

When the apparatus is a chip used in a terminal, the chip in the terminal implements functions of the terminal in the foregoing method embodiments. The chip receives information from another module (for example, a radio frequency module or an antenna) in the terminal, where the information is from another terminal or a radio access network device. Alternatively, the chip sends information to another module (for example, a radio frequency module or an antenna) in the terminal, where the information is sent by the terminal to another terminal or a radio access network device.

When the apparatus is a chip used in a radio access network device, the chip implements functions of the radio access network device in the foregoing method embodiments. The chip receives information from another module (for example, a radio frequency module or an antenna) in the radio access network device, where the information is from another radio access network device or a terminal. Alternatively, the chip sends information to another module (for example, a radio frequency module or an antenna) in the radio access network device, where the information is sent by the radio access network device to another radio access network device or a terminal.

A person of ordinary skill in the art may understand that various numbers such as first and second in this application are merely used for differentiation for ease of description, and are not used to limit the scope of embodiments of this application or represent a sequence. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects. "At least one" means one or more. "At least two" means two or more. "At least one", "any one", or a similar expression thereof indicates any combination of the items, and includes any combination of a singular item (piece) or plural items (pieces). For example, at least one (piece or type) of a, b, or c may indicate: a, b, c, a and b, a and c, b and c, or a, b, and c, where a, b, and c may be singular or plural. "A plurality of" means two or more, and another quantifier is similar to this.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

All or some of the foregoing embodiments may be implemented by using software, hardware, firmware, or any combination thereof. When software is used to implement embodiments, all or some of embodiments may be implemented in the form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like.

Steps of the method described in embodiments of this application may be directly embedded into hardware, a software unit executed by a processor, or a combination thereof. The software unit may be stored in a random access memory (random access memory, RAM), a flash memory, a read-only memory (read-only memory, ROM), a register, a hard disk drive, a removable disk, or a storage medium in any other form in the art. For example, the storage medium may be connected to a processor so that the processor may read information from the storage medium and write information to the storage medium. Optionally, the storage medium may be integrated into a processor. The processor and the storage medium may be disposed in an ASIC.

This application further provides a computer-readable medium storing a computer program. When the computer program is executed by a computer, functions of any one of the foregoing method embodiments are implemented.

This application further provides a computer program product. When the computer program product is executed by a computer, functions of any one of the foregoing method embodiments are implemented.

For same or similar parts in embodiments of this application, refer to each other. **In** embodiments of this application and the implementations/methods/implementation methods in embodiments, unless otherwise specified or if there is a logic conflict, terms and/or descriptions are consistent and may be mutually referenced between different embodiments and between the implementations/methods/implementation methods in embodiments. Technical features in different embodiments and the implementations/methods/implementation methods in embodiments may be combined, based on an internal logical relationship of the technical features, to form a new embodiment, implementation, method, or implementation method. The foregoing implementations of this application are not intended to limit the protection scope of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A discontinuous reception DRX method, comprising:
starting a DRX on duration timer and monitoring a physical downlink control channel PDCCH in a DRX cycle duration;
when the PDCCH indicating new data transmission is detected in the DRX cycle duration, starting a DRX-inactivity timer, and continuing to monitor the PDCCH; and
stopping the DRX on duration timer when at least the following conditions are satisfied:
the DRX on duration timer does not expire, and the DRX-inactivity timer expires.

2. The method according to claim 1, wherein after the starting a DRX-inactivity timer, the method further comprises:
when the PDCCH indicating new data transmission is detected, restarting the DRX-inactivity timer, and continuing to monitor the PDCCH.

3. The method according to claim 1 or 2, wherein after the stopping the DRX on duration timer, the method further comprises:
monitoring the PDCCH when one or both of the following timers are running and do not expire:
a DRX downlink retransmission timer and a DRX uplink retransmission timer.

4. The method according to claim 3, wherein a time length of the DRX downlink retransmission timer and/or a time length of the DRX uplink retransmission timer are/is configured by a radio access network device.

5. The method according to any one of claims 1 to 4, wherein a time length of the DRX on duration timer and a time length of the DRX-inactivity timer are configured by the radio access network device.

6. The method according to any one of claims 1 to 5, wherein the method further comprises:
receiving DRX configuration information from the radio access network device; and
the stopping the DRX on duration timer when at least the following conditions are satisfied comprises:
determining, based on the DRX configuration information, to stop the DRX on duration timer when at least the conditions are satisfied.

7. A discontinuous reception DRX configuration method, comprising:
sending DRX configuration information to a terminal, wherein a DRX on duration timer started in a DRX cycle duration is configured, based on the DRX configuration information, to stop when at least the following conditions are satisfied:
the DRX on duration timer does not expire, and a DRX-inactivity timer started in the DRX cycle duration expires.

8. The method according to claim 7, wherein a time length of the DRX on duration timer and a time length of the DRX-inactivity timer are further configured based on the DRX configuration information.

9. A discontinuous reception DRX method, comprising:
starting a DRX on duration timer and monitoring a PDCCH in a DRX cycle duration;
when the PDCCH indicating new data transmission is detected in the DRX cycle duration, restarting a DRX-inactivity timer started before the DRX cycle duration, and continuing to monitor the PDCCH; and
continuing to run the DRX on duration timer when at least the following conditions are satisfied:
the DRX on duration timer does not expire, and the DRX-inactivity timer expires.

10. The method according to claim 9, wherein the method further comprises:
when the PDCCH indicating new data transmission is detected, restarting the DRX-inactivity timer, and continuing to monitor the PDCCH.

11. The method according to claim 9 or 10, wherein the method further comprises:
monitoring the PDCCH when one or both of the following timers are running and do not expire:
a DRX downlink retransmission timer and a DRX uplink retransmission timer.

12. The method according to claim 11, wherein:
a time length of the DRX downlink retransmission timer and/or a time length of the DRX uplink retransmission timer are/is configured by a radio access network device.

13. The method according to any one of claims 9 to 12, wherein a time length of the DRX on duration timer and a time length of the DRX-inactivity timer are configured by the radio access network device.

14. The method according to any one of claims 9 to 13, wherein the method further comprises:
receiving DRX configuration information from the radio access network device; and
the continuing to run the DRX on duration timer when at least the foregoing conditions are satisfied comprises:
determining, based on the DRX configuration information, to continue to run the DRX on duration timer when at least the conditions are satisfied.

15. A discontinuous reception DRX configuration method, comprising:
sending DRX configuration information to a terminal, wherein a DRX on duration timer started in a DRX cycle duration is configured, based on the DRX configuration information, to continue to run when at least the following conditions are satisfied:
the DRX on duration timer does not expire, and a DRX-inactivity timer started before the DRX cycle duration expires.

16. The method according to claim 15, wherein a time length of the DRX on duration timer and a time length of the DRX-inactivity timer are further configured based on the DRX configuration information.

17. A discontinuous reception DRX method, comprising:
receiving DRX configuration information from a radio access network device, wherein physical downlink control channel PDCCH monitoring rasters are configured based on the DRX configuration information, and the PDCCH monitoring rasters are for monitoring a PDCCH;
monitoring the PDCCH on the PDCCH monitoring rasters in a DRX cycle duration;
when the PDCCH indicating new data transmission is detected in the DRX cycle duration, starting a DRX-inactivity timer, and continuing to monitor the PDCCH on the PDCCH monitoring rasters in the DRX cycle duration; and
stopping monitoring the PDCCH on the PDCCH monitoring rasters in the DRX cycle duration when at least the following condition is satisfied:
the DRX-inactivity timer expires.

18. The method according to claim 17, wherein after the starting a DRX-inactivity timer, the method further comprises:
when the PDCCH indicating new data transmission is detected, restarting the DRX-inactivity timer, and continuing to monitor the PDCCH on the PDCCH monitoring rasters.

19. The method according to claim 17 or 18, wherein after the stopping monitoring the PDCCH on the PDCCH monitoring rasters in the DRX cycle duration, the method further comprises:
monitoring the PDCCH in the DRX cycle duration when one or both of the following timers are running and do not expire:
a DRX downlink retransmission timer and a DRX uplink retransmission timer.

20. The method according to claim 19, wherein a time length of the DRX downlink retransmission timer and/or a time length of the DRX uplink retransmission timer are/is further configured based on the DRX configuration information.

21. The method according to any one of claims 17 to 20, wherein a time length of the DRX-inactivity timer is further configured based on the DRX configuration information.

22. The method according to any one of claims 17 to 21, wherein the stopping monitoring the PDCCH on the PDCCH monitoring rasters in the DRX cycle duration when at least the following condition is satisfied comprises:
determining, based on the DRX configuration information, to stop monitoring the PDCCH on the PDCCH monitoring rasters in the DRX cycle duration when at least the condition is satisfied.

23. A discontinuous reception DRX configuration method, comprising:
sending DRX configuration information to a terminal, wherein physical downlink control channel PDCCH monitoring rasters are configured based on the DRX configuration information, the PDCCH monitoring rasters are for monitoring a PDCCH, and PDCCH monitoring on the PDCCH monitoring rasters in a DRX cycle duration is further configured, based on the DRX configuration information, to stop when at least the following condition is satisfied:
a DRX-inactivity timer started in the DRX cycle duration expires.

24. The method according to claim 23, wherein a time length of the DRX-inactivity timer is further configured based on the DRX configuration information.

25. A discontinuous reception DRX configuration method, comprising:
receiving DRX configuration information from a radio access network device, wherein PDCCH monitoring rasters for monitoring a PDCCH are configured based on the DRX configuration information;
monitoring the PDCCH on PDCCH monitoring rasters in a DRX cycle duration;
when the PDCCH indicating new data transmission is detected in the DRX cycle duration, restarting a DRX-inactivity timer started before the DRX cycle duration, and continuing to monitor the PDCCH on the PDCCH monitoring rasters in the DRX cycle duration; and
continuing to monitor the PDCCH on the PDCCH monitoring rasters in the DRX cycle duration when at least the following condition is satisfied:
the DRX-inactivity timer expires.

26. The method according to claim 25, wherein the method further comprises: when the PDCCH indicating new data transmission is detected, restarting the DRX-inactivity timer, and continuing to monitor the PDCCH on the PDCCH monitoring rasters.

27. The method according to claim 25 or 26, wherein the method further comprises:
monitoring the PDCCH in the DRX cycle duration when one or both of the following timers are running and do not expire:
a DRX downlink retransmission timer and a DRX uplink retransmission timer.

28. The method according to claim 25, wherein a time length of a DRX downlink retransmission timer and/or a time length of a DRX uplink retransmission timer are/is further configured based on the DRX configuration information.

29. The method according to any one of claims 25 to 28, wherein a time length of the DRX-inactivity timer is further configured based on the DRX configuration information.

30. The method according to any one of claims 25 to 29, wherein the continuing to monitor the PDCCH on the PDCCH monitoring rasters in the DRX cycle duration when at least the following condition is satisfied comprises:
determining, based on the DRX configuration information, to continue to monitor the PDCCH on the PDCCH monitoring rasters in the DRX cycle duration when at least the condition is satisfied.

31. A discontinuous reception DRX configuration method, comprising:
sending DRX configuration information to a terminal, wherein PDCCH monitoring rasters are configured based on the DRX configuration information, the PDCCH monitoring rasters are for monitoring a PDCCH, and PDCCH monitoring on the PDCCH monitoring rasters in a DRX cycle duration is further configured, based on the DRX configuration information, to continue to be performed when at least the following condition is satisfied:
a DRX-inactivity timer started before the DRX cycle duration expires.

32. The method according to claim 31, wherein a time length of the DRX-inactivity timer is further configured based on the DRX configuration information.

33. A communication apparatus, wherein the apparatus comprises a module configured to perform the method according to any one of claims 1 to 6, 9 to 14, 17 to 22, or 25 to 30.

34. A communication apparatus, wherein the apparatus comprises a module configured to perform the method according to any one of claims 7 and 8, 15 and 16, 23 and 24, or 31 and 32.

35. A communication apparatus, comprising a processor, wherein the processor is coupled to a memory, and the memory is configured to store a program or instructions; and when the program or the instructions are executed by the processor, the apparatus is caused to perform the method according to any one of claims 1 to 6, 9 to 14, 17 to 22, or 25 to 30.

36. A communication apparatus, comprising a processor, wherein the processor is coupled to a memory, and the memory is configured to store a program or instructions; and when the program or the instructions are executed by the processor, the apparatus is caused to perform the method according to any one of claims 7 and 8, 15 and 16, 23 and 24, or 31 and 32.

37. A computer-readable storage medium, wherein the computer-readable storage medium stores instructions; and when the instructions are executed, a computer is caused to perform the method according to any one of claims 1 to 6, 9 to 14, 17 to 22, or 25 to 30.

38. A computer-readable storage medium, wherein the computer-readable storage medium stores instructions; and when the instructions are executed, a computer is caused to perform the method according to any one of claims 7 and 8, 15 and 16, 23 and 24, or 31 and 32.

39. A computer program product, comprising computer program code, wherein when the computer program code is run, the method according to any one of claims 1 to 6, 9 to 14, 17 to 22, or 25 to 30 is implemented.

40. A computer program product, comprising computer program code, wherein when the computer program code is run, the method according to any one of claims 7 and 8, 15 and 16, 23 and 24, or 31 and 32 is implemented.

41. A chip, wherein the chip comprises at least one processor, and the processor is configured to perform the method according to any one of claims 1 to 32.

42. A communication system, comprising a communication apparatus configured to perform the method according to any one of claims 1 to 6, 9 to 14, 17 to 22, or 25 to 30, and a communication apparatus configured to perform the method according to any one of claims 7 and 8, 15 and 16, 23 and 24, or 31 and 32.
